# EUROPEAN PATENT APPLICATION

(11) **EP 4 349 153 A1**
(43) Date of publication of application: **10.04.2024**
(21) Application number: 22827499.9
(22) Date of filing: 20.06.2022
(51) Int. Cl.: A01D 34/69, A01D 34/68, A01D 34/00

(54) **CUTTER ASSEMBLY, POWER HEAD, AND PUSH MOWER**

(30) Priority: 22.06.2021 CN 202121393386 U; 22.06.2021 CN 202110696169; 13.07.2021 CN 202110787992; 13.07.2021 CN 202121593898 U; 25.08.2021 CN 202122023414 U
(71) Applicant: Globe (Jiangsu) Co., Ltd., Changzhou, Jiangsu 213023 (CN)
(72) Inventor: FENG, Shouchuan, hangzhou, Jiangsu 213023 (CN); DONG, Jianhua, hangzhou, Jiangsu 213023 (CN)
(74) Representative: Bergenstråhle & Partners AB
(86) International application number: PCT/CN2022/099685
(87) International publication number: WO 2022/268005

(57) **Abstract**

A blade assembly, a power head and a lawn mower are provided, the blade assembly includes a blade base, a first blade and a second blade. A first boss and a second boss are arranged on a blade assembly surface of the blade base. A height of the first boss is a first height, and a height of the second boss is a second height. The first blade is provided with a first mounting hole matched with the first boss, the second blade is provided with a second mounting hole matched with the second boss. The first blade is mounted on the first boss, and the second blade is mounted on the second boss. Through arranging a step-shaped boss to position and mount a blade on the blade base, it is more convenient to realize an assembly and replacement of double blades.

## Description

### TECHNICAL FIELD

The disclosure relates to a technical field of garden tools, and specifically relates to a blade assembly, a power head and a lawn mower.

### BACKGROUND

With the continuous development of power tool technology, mowers have also been more and more widely used. The lawn mower is mainly used in garden decoration pruning, grassland greening pruning, city streets, greening attractions, pastoral pruning, field weeding, especially in the park grass, grassland, football field and other grass fields.

Taking the lawn mower as an example, in order to obtain a better lawn-crushing performance, a double-layer blade is arranged in the lawn mower, and the two blades are staggered at a certain angle, so that the lawn can be cut twice from high to low and the cut lawn is finer, so as to achieve the purpose of lawn crushing.

However, the fixing mode of the double blade of the conventional lawn mower is more complicated, and there is no foolproof structure. The blade position assembly has no uniqueness, so that the cutting height of the whole mower may change when mowing.

### SUMMARY

The disclosure provides a lawn mower to improve a conventional handle adjustment structure. The conventional handle adjustment structure is usually arranged at a pivot of a handle and a body, and when an operator operates the handle adjustment structure, it is necessary to bend down to operate and loosen a lower part of the handle. Therefore, it is easy to bring problems such as inconvenience and fatigue to the operator.

The disclosure further provides a blade assembly. The blade assembly includes a blade base, a first blade and a second blade.

A first boss and a second boss are arranged on a blade assembly surface of the blade base, a height of the first boss is a first height, and a height of the second boss is a second height.

The first blade is provided with a first mounting hole matched with the first boss.

The second blade is provided with a second mounting hole matched with the second boss.

The first blade is mounted on the first boss, and the second blade is mounted on the second boss.

In an embodiment of the disclosure, the first height is greater than the second height.

In an embodiment of the disclosure, a range of the first height is from 5mm to 8mm, and a range of the second height is from 2mm to 4mm.

In an embodiment of the disclosure, the first blades are stacked on top of the second blades, and the first blade and the second blade are dislocated from each other.

In an embodiment of the disclosure, the second boss is arranged between the first boss and the blade base.

In an embodiment of the disclosure, a projection profile of the first boss on the blade base is positioned in a projection profile of the second boss on the blade base.

In an embodiment of the disclosure, the blade assembly surface of the blade base is further provided with at least one second positioning boss, the second positioning boss is arranged at a side edge of the second boss, and the second blade is provided with a second positioning hole matched with the second positioning boss.

In an embodiment of the disclosure, the blade assembly surface of the blade base is further provided with at least one first positioning boss, the first positioning boss is arranged at a side edge of the first boss, the second positioning boss is arranged between the first positioning boss and the blade base, and the first blade is provided with a first positioning hole matched with the first positioning boss.

In an embodiment of the disclosure, the first positioning boss is foolproof.

In an embodiment of the disclosure, an edge of the blade assembly surface of the blade base is provided with at least one supporting boss, and the first blade is supported on a supporting surface of the supporting boss.

The disclosure further provides a power head. The power head includes a housing, a cover, a control assembly, at least one internal air inlet, at least one air guiding plate and a driving assembly.

The housing includes at least one external air inlet.

The cover is arranged on the housing and forms a first cavity with the housing.

The control assembly is arranged on the housing, and the cover covers the control assembly.

The internal air inlet is arranged on the housing and arranged at a side edge of the control assembly.

The air guiding plate is arranged on the housing and forms a second cavity with the control assembly.

The driving assembly is arranged at a bottom of the housing, includes an air outlet, and forms a third cavity with the air guiding plate.

Wherein, cooling air flow enters the first cavity through the external air inlet, and enters the second cavity and the third cavity through the internal air inlet to flow out through the air outlet.

In an embodiment of the disclosure, the cover includes a windshield plate, and the windshield plate contacts a top of the housing.

In an embodiment of the disclosure, the control assembly includes a casing, a heat sink and a control unit.

The casing is arranged on a supporting base.

The heat sink is arranged on the casing.

The control unit is arranged on the casing, and the heat sink and the control panel are located in the second cavity.

In an embodiment of the disclosure, the driving assembly includes a motor base and a motor.

The motor base is arranged at the bottom of the housing, and the air outlet is arranged on the motor base.

The motor is arranged on the motor base.

In an embodiment of the disclosure, the housing further includes a battery pack cavity, and an energy assembly is arranged in the battery pack cavity.

In an embodiment of the disclosure, an air speed of the cooling air flow in the second cavity is greater than an air speed of the cooling air flow in the third cavity.

The disclosure further provides a lower handle folding mechanism. The lawn mower includes a chassis, driving assembly, a blade assembly and a handle folding mechanism.

Two ends of a bottom of the chassis are provided with front wheels and rear wheels respectively.

The driving assembly is mounted on the chassis.

The blade assembly is mounted on the bottom of the chassis and connected with the driving assembly.

The handle folding mechanism is mounted on the chassis, and includes a handle mounting base, limiting plate, handle, cross rod and a limiting assembly.

The handle mounting base is fixedly mounted on the chassis.

The limiting plate s mounted on the handle mounting base and provided with a plurality of limiting structures.

An end of the handle is rotatably connected with the limiting plate, and the handle includes a first handle and a second handle.

The cross rod is mounted between the handles.

The limiting assembly is located in the handle, and the cross rod is capable of driving the limiting assembly to move to enable the handle to be capable of being fixed at different positions of the limiting plate.

In an embodiment of the disclosure, the limiting assembly comprises a spring pin, the limiting structure comprises at least a first limiting structure, a second limiting structure and a third limiting structure, and the first limiting structure, the second limiting structure and the third limiting structure are arranged at intervals in a circumferential direction.

The first limiting structure is provided with a first limiting hole, and the spring pin is matched with the first limiting hole to fix the handle at a first position;

The second limiting structure is a blocking plate, and the spring pin on the limiting assembly is matched with the blocking plate to fix the handle at a second position;

The third limiting structure is provided with a second limiting hole, and the spring pin on the limiting assembly is matched with the second limiting hole to fix the handle at a third position.

In an embodiment of the disclosure, the handle is provided with a notch, the cross rod is mounted at the notch through a cross rod mounting plate, and the cross rod mounting plate is matched with the notch.

In an embodiment of the disclosure, the limiting assembly includes a connecting piece, a spring and a steel wire rope.

The connecting piece is fixedly connected at an end of the spring pin, and the connecting part is connected with the handle through a column pin.

The spring is sleeved on the spring pin and located between the connecting piece and a gasket at a front end of the spring pin.

A first end of the steel wire rope is connected with the connecting piece, and a second end of the steel wire rope is connected with the cross rod mounting plate.

The cutter assembly arranges a step-shaped boss on the blade base to position and mount the blade, which is more convenient to realize an assembly and replacement of double blades.

The cutter assembly arranges a step-shaped boss on the blade base to position and mount the blade. When the first blade is assembled separately, it may play a role of supporting the first blade, and a position of the first blade may be kept unchanged.

The power head of the disclosure includes the housing. The housing includes the first housing and the second housing arranged symmetrically, and external air inlets are arranged both on the first housing and the second housing. A cover is arranged on the housing. The first housing, the second housing and the cover forms the first cavity. The cooling air flow enters the first cavity through the external air inlet. The disclosure further provides a supporting base arranged on the housing, and two ends of the supporting base are provided with the internal air inlets. At the same time, the housing further includes the air guiding plate, the air guiding plate extends to an inside of the supporting base, and the air guiding plate is connected with the internal air inlet simultaneously. When the control assembly is arranged on the supporting base, the control assembly and the air guiding plate may form the second cavity. At the same time, the heat sink and the control unit on the control assembly are also located in the second cavity. The cooling air flow entering the first cavity may enter the second cavity through the internal air inlet, and at the same time, due to an effect of the air guiding plate, the cooling air flow may be fully in contact with the heat sink and the control unit, which facilitates a rapid heat dissipation of the control unit and the heat sink. The driving assembly is arranged at the bottom of the housing. The air outlet is arranged on the driving assembly, the driving assembly and the air guiding plate form the third cavity, and the second cavity and the third cavity may be communicated since the air guiding plate forms a ventilation gap, so that the cooling air flow may enter the third cavity.

The lawn mower of the disclosure arranges the plurality of limiting structures on the limiting plate, mounts the handle on the limiting plate, and controls a matching between the handle and the limiting structure, so as to enable the handle assembly to be fixed at different positions and fix the handle assembly to a required position by one hand. The operator can pull the cross rod when standing at any position next to the lawn mower, and the operation is very convenient.

### BRIEF DESCRIPTION OF THE DRAWINGS

In order to explain technical solutions of embodiments of the disclosure more clearly, the following will briefly introduce drawings used in a description of the embodiments or the conventional art. Obviously, the drawings in the following description are only some embodiments of the disclosure. For those of ordinary skill in the art, other drawings may be obtained based on these drawings without creative work.
FIG. 1 is a schematic structural view of a lawn mower.
FIG. 2 is a schematic assembly view of the lawn mower and a lawn collection box according to in an embodiment of the disclosure.
FIG. 3 is a schematic assembly view of a driving assembly and a chassis according to in an embodiment of the disclosure.
FIG. 4 is a schematic structural view of the chassis according to an embodiment of the disclosure.
FIG. 5 is a schematic structural view of a handle assembly according to an embodiment of the disclosure.
FIG. 6 is a schematic structural view of a limiting assembly in the handle assembly according to an embodiment of the disclosure.
FIG. 7 is a schematic assembly view of a cross rod and a cross rod mounting plate in the handle assembly according to in an embodiment of the disclosure.
FIG. 8 is a schematic structural view of a limiting plate in the handle assembly according to an embodiment of the disclosure.
FIG. 9 is a partial schematic structural view of a handle in the handle assembly according to an embodiment of the disclosure.
FIG. 10 is a schematic view of the handle assembly locating at a second position according to an embodiment of the disclosure.
FIG. 11 is a schematic view of the handle assembly locating at a third position according to an embodiment of the disclosure.
FIG. 12 is a schematic structural view of a bottom of the lawn mower according to an embodiment of the disclosure.
FIG. 13 is a schematic structural view of the bottom of the lawn mower assembled with a rear block according to an embodiment of the disclosure.
FIG. 14 is a schematic structural view of the rear block according to an embodiment of the disclosure.
FIG. 15 is a schematic structural top view of the rear block according to an embodiment of the disclosure.
FIG. 16 is a schematic structural view of the rear block according to an embodiment of the disclosure from another angle.
FIG. 17 is a schematic structural view of a fixing component according to an embodiment of the disclosure.
FIG. 18 is an enlarged schematic view of C in FIG. 4.
FIG. 19 is a schematic assembly view of the chassis and a battery pack accommodating cavity according to an embodiment of the disclosure.
FIG. 20 is a schematic structural view of the battery pack accommodating cavity according to an embodiment of the disclosure.
FIG. 21 is a front view of FIG. 19.
FIG. 22 is a cross-sectional view along H-H in FIG. 21.
FIG. 23 is a partial exploded schematic view of the lawn mower according to an embodiment of the disclosure.
FIG. 24 is a schematic assembly view of the driving assembly and a blade assembly according to in an embodiment of the disclosure.
FIG. 25 is a schematic structural view of the lawn mower according to an embodiment of the disclosure from another angle.
FIG. 26 is an enlarged schematic view of F in FIG. 25.
FIG. 27 is a schematic structural view of a height adjustment mechanism according to an embodiment of the disclosure.
FIG. 28 is a front view of FIG. 27.
FIG. 29 is a schematic assembly view of a tail plate and the height adjustment mechanism according to in an embodiment of the disclosure.
FIG. 30 is a bottom view of FIG. 29.
FIG. 31 is a partial schematic structural view of a bottom of the height adjustment mechanism according to an embodiment of the disclosure.
FIG. 32 is a schematic structural view of a gear plate of the height adjustment mechanism according to an embodiment of the disclosure.
FIG. 33 is a schematic structural view of the height adjustment mechanism according to an embodiment of the disclosure from another angle.
FIG. 34 is a top view of FIG. 29.
FIG. 35 is a cross-sectional view along D-D in FIG. 34.
FIG. 36 is a schematic structural view of a gear indication plate of the height adjustment mechanism according to an embodiment of the disclosure.
FIG. 37 is a schematic assembly view of the gear indication plate and a base plate according to in an embodiment of the disclosure.
FIG. 38 is a schematic structural view of a cover casing according to an embodiment of the disclosure.
FIG. 39 is a schematic assembly view of the tail plate and a flip cover structure according to in an embodiment of the disclosure.
FIG. 40 is a schematic structural view of the flip cover structure according to an embodiment of the disclosure.
FIG. 41 is an internal schematic structural view of the flip cover structure according to an embodiment of the disclosure.
FIG. 42 is a schematic structural view of a flip cover fixing base of the flip cover structure according to an embodiment of the disclosure.
FIG. 43 is a perspective schematic structural view of another lawn mower.
FIG. 44 is an exploded assembly view of the blade assembly of another lawn mower.
FIG. 45 is a bottom view of a first blade in a mowing assembly according to an embodiment of the disclosure.
FIG. 46 is a front view of the first blade of the mowing assembly according to an embodiment of the disclosure.
FIG. 47 is a perspective schematic structural view of a second blade of the mowing assembly according to in an embodiment of the disclosure.
FIG. 48 is a top view of the second blade of the mowing assembly according to an embodiment of the disclosure.
FIG. 49 is a front view of the second blade of the mowing assembly according to an embodiment of the disclosure.
FIG. 50 is a perspective schematic structural view of a blade base of the mowing assembly according to in an embodiment of the disclosure.
FIG. 51 is a perspective schematic structural bottom view of the blade base of the mowing assembly according to in an embodiment of the disclosure.
FIG. 52 is a cross-sectional view along an A-A direction in FIG. 41.
FIG. 53 is a schematic structural view of the mowing assembly assembled on a rotating output shaft according to in an embodiment of the disclosure.
FIG. 54 is a cross-sectional view along a B-B direction in FIG. 53.
FIG. 55 is a structural view of a lawn mower according to another embodiment of the disclosure.
FIG. 56 is a structural view of a bottom of the lawn mower according to another embodiment of the disclosure.
FIG. 57 is a structural view of a power head according to another embodiment of the disclosure.
FIG. 58 is an exploded view of a first housing, a second housing and a cover according to another embodiment of the disclosure.
FIG. 59 is a position structural view of a control assembly according to another embodiment of the disclosure.
FIG. 60 is a schematic view of the control assembly according to another embodiment of the disclosure.
FIG. 61 is a whole structural view of an internal air inlet and an air guiding plate according to another embodiment of the disclosure.
FIG. 62 is an internal structural view of the first housing according to another embodiment of the disclosure.
FIG. 63 is a schematic view of a first cavity, a second cavity and a third cavity according to another embodiment of the disclosure.
FIG. 64 is a connection view of a second flip cover and a fixing cover according to another embodiment of the disclosure.
FIG. 65 is a structural view of the fixing cover according to another embodiment of the disclosure.
FIG. 66 is a partial enlarged view of FIG. 65 of the disclosure.
FIG. 67 is a structural view of the second flip cover according to another embodiment of the disclosure.
FIG. 68 is a matching schematic view of an upper buckle and a lower buckle according to another embodiment of the disclosure.

### DETAILED DESCRIPTION

The following describes the implementation of the disclosure through specific embodiments, and those skilled in the art can easily understand other advantages and effects of the disclosure from the content disclosed in this specification. The disclosure may also be implemented or applied through other different specific embodiments. Various details in this specification may also be modified or changed based on different viewpoints and applications without departing from the disclosure.

It should be noted that drawings provided in the embodiments are only illustrative of a basic idea of the disclosure. The drawings only show assemblies related to the disclosure instead of drawing according to the number, shape and size of the assemblies in actual implementation. In actual implementation, the type, quantity and ratio of each assembly may be changed at will, and a layout of the assemblies may also be more complicated.

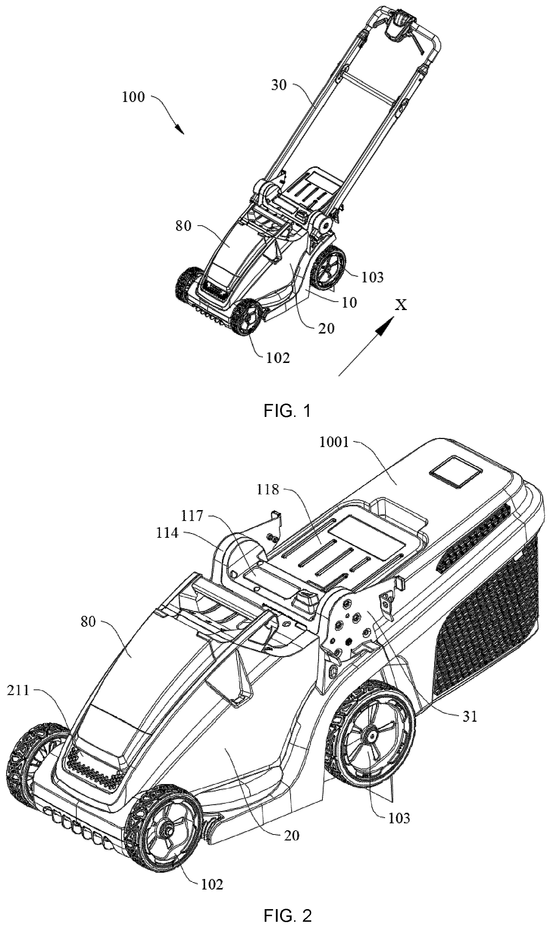

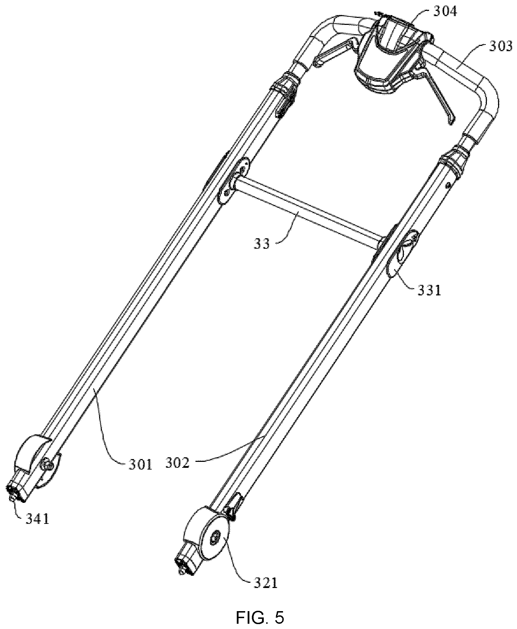

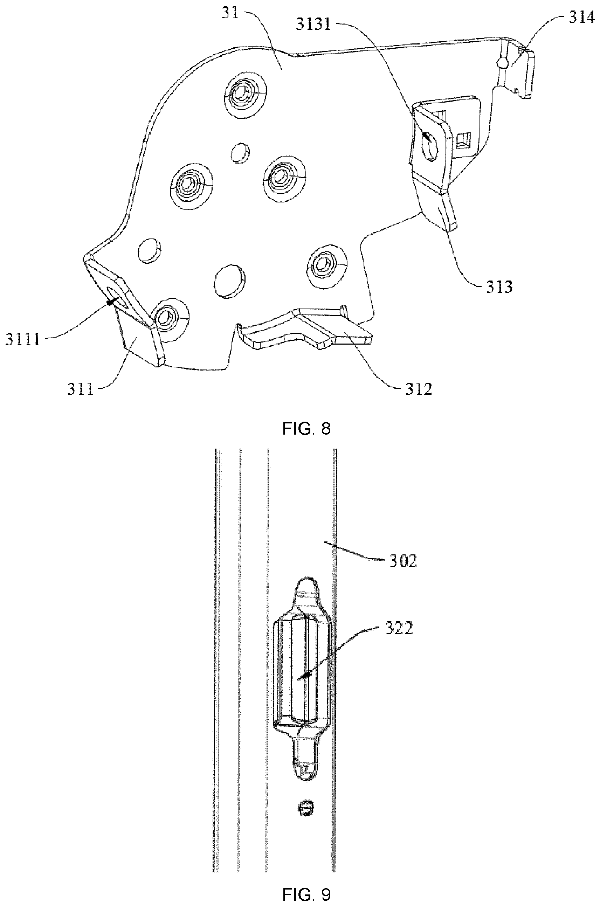

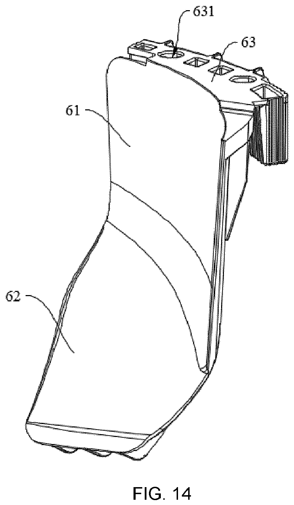

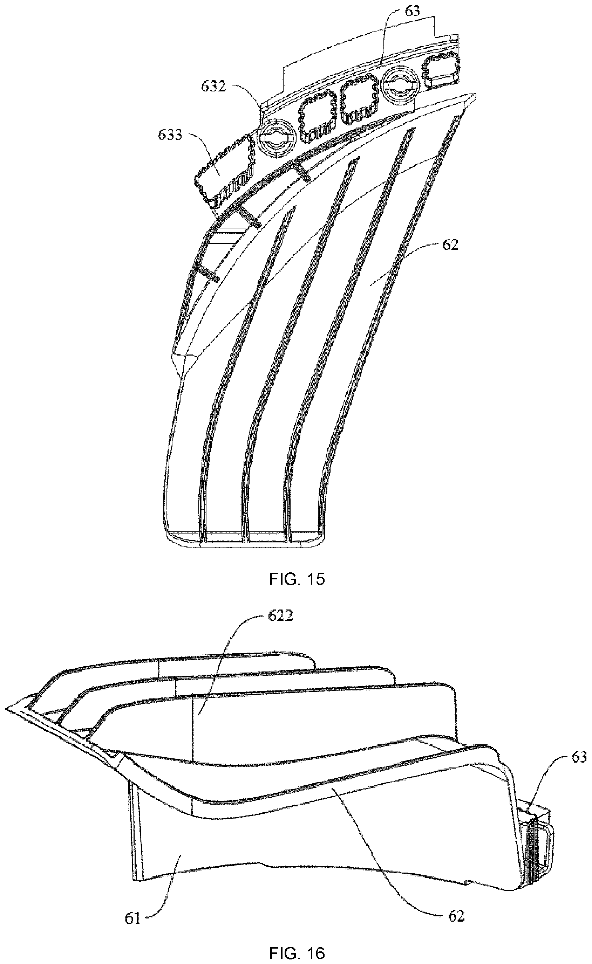

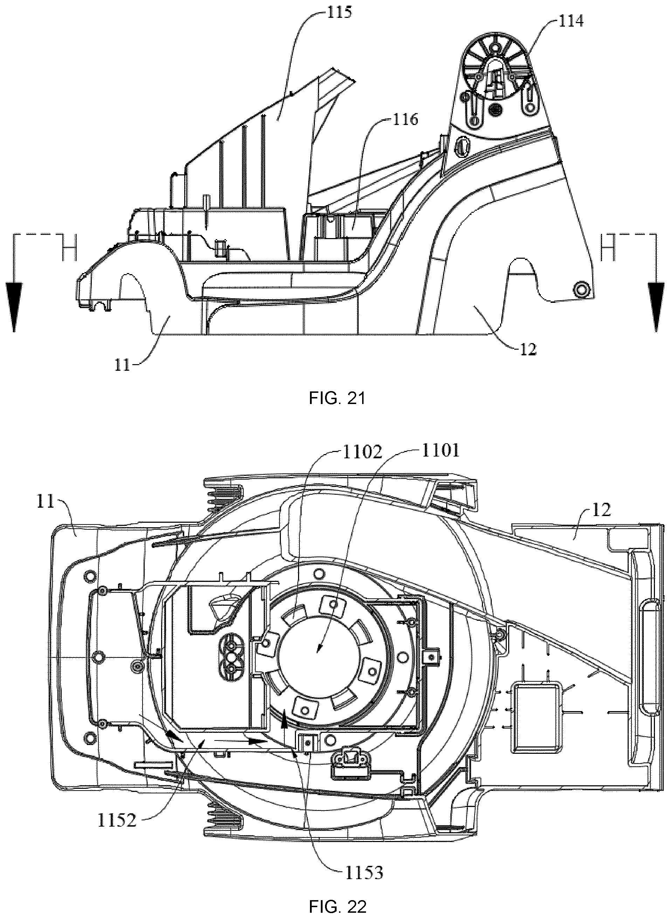

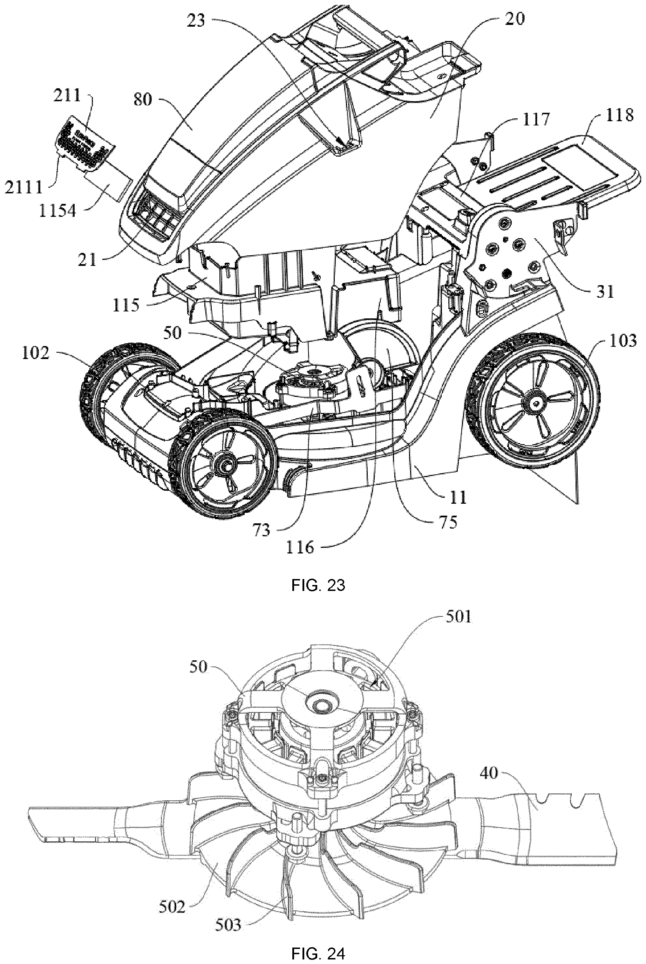

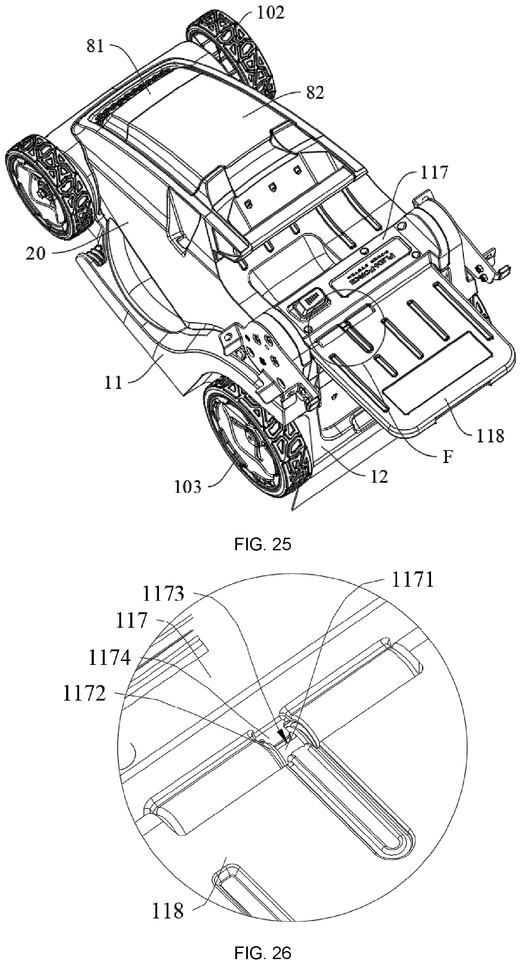

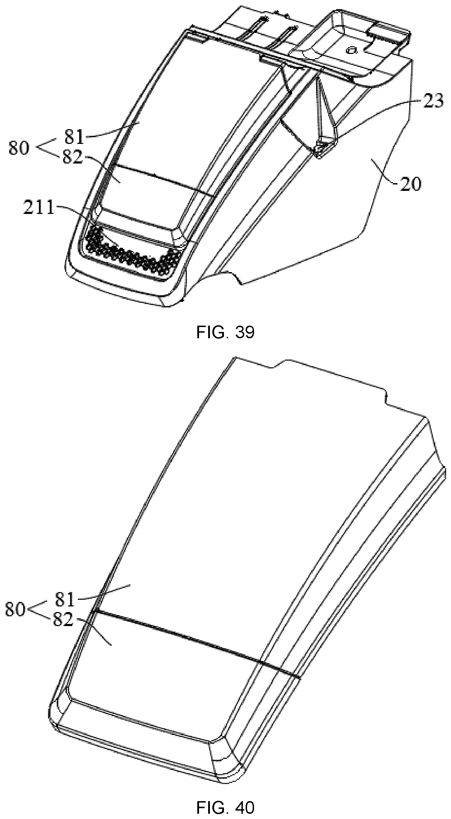

Please refer to FIG. 1 through FIG. 41. The disclosure provides a garden tool. Taking the lawn mower 100 as an example, it includes a chassis 10, a cover casing 20, a handle assembly 30, a working assembly and a driving assembly 50. The driving assembly 50 is mounted on the chassis 10. The working assembly may be a blade assembly 40, and the blade assembly 40 is located in a blade accommodating cavity 101 at a bottom of the chassis 10, and is fixedly connected with an output shaft of the driving assembly 50. The cover casing 20 covers the chassis 10, and wraps the driving assembly 50 inside. Front wheels 102 and rear wheels 103 are respectively mounted on both sides of the bottom of the chassis 10 to facilitate to move the lawn mower 100.

Please refer to FIG. 1 through FIG. 4. In this embodiment, the chassis 10 includes a base plate 11 and a tail plate 12. The tail plate 12 is fixedly mounted on a tail part of base plate 11, and a side of the base plate 11 away from the tail plate 12 is provided with a first groove 110, which is used for accommodating a front wheel axle 111. Two ends of the front wheel axle 111 are provided with the front wheels 102. The tail plate 12 is likewise provided with a second groove 112, which is used for accommodating a rear wheel axle 113, and two ends of the rear wheel axle 113 are provided with the rear wheels 103. The front wheels 102 and the rear wheels 103 rotates freely for a rotation center of the front wheel axle 111 and the rear wheel axle 113 respectively, so as to facilitate a movement of the lawn mower 100. And a grass catcher 1001 is detachably mounted at the tail plate 12, so as to be convenient for storing the lawn that is cut, and the grass catcher 1001 is a lawn collection box.

Please refer to FIG. 1 through FIG. 4. In this embodiment, the handle assembly 30 is arranged on one side of the chassis 10 close to the rear wheel 103. Specifically, a handle mounting base 114 is arranged on both sides of a top surface of a tail part of the base plate 11, and one end of the handle assembly 30 is connected with the handle mounting base 114, so that the handle assembly 30 is used to push the lawn mower 100 to move.

Please refer to FIG. 1, FIG. 5 through FIG. 9. In this embodiment, the handle assembly 30 includes a limiting plate 31, a handle, a cross rod 33 and a limiting assembly 34.The limiting plate 31 is fixedly connected with the handle mounting base 114, the handle is rotatably connected with the limiting plate 31 through a rotating component 321, and the rotating component 321 is rotatably connected with the limiting plate 31, which means that the handle can rotate with a rotation center of the rotating component 321 as the rotation center, so that the handle is rotated to different positions, and a limiting is carried out through a matching effect of the limiting assembly 34 and the limiting plate 31. The handle is a hollow structure so as to accommodate the limiting assembly 34, the handle includes a first handle 301 and a second handle 302, and the cross rod 33 is mounted between the first handle 301 and the second handle 302_{∘}

Please refer to FIG. 1, FIG. 5 through FIG. 9. In this embodiment, ends of the first handle 301 and the second handle 302 away from the chassis 10 are connected through a U-shaped upper handle 303. The U-shaped upper handle 303 is fixed with a switch box 304, and a motor of a main blade may be started by a double action of a button and a switch handle on the switch box 304.

Please refer to FIG. 1, FIG. 5 through FIG. 9. In this embodiment, a structure of the first handle 301 and a structure of the second handle 302 are consistent. The first handle 301 is taken as an example to illustrate, a second notch 322 is arranged on one end of the handle away from the handle mounting base114, a cross rod mounting plate 331 is mounted at the second notch 322, the cross rod mounting plate 331 is matched with the second notch 322, and the cross rod mounting plate 331 includes a first mounting plate 3311 and a second mounting plate 3312. The first mounting plate 3311 and the second mounting plate 3312 are respectively arranged on two sides of the second notch 322, so that the second notch 322 is closed, and a second through hole 3313 is arranged on the cross rod mounting plate 331 in order to facilitate a connection of the cross rod 33. The second mounting plate 3312 is provided with a plurality of barbed structures 3314 extending inward, and the plurality of the barbed structures 3314 are arranged along a circumferential direction of the second through hole 3313 to realize a limitation of the cross rod 33, so as to avoid the cross rod 33 from shaking between the first handle 301 and the second handle 302.

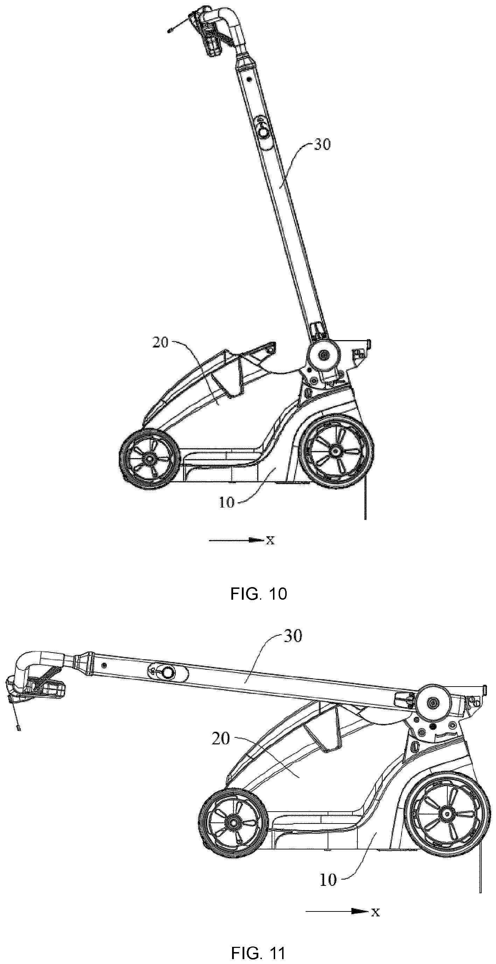

Please refer to FIG. 1, FIG. 5 through FIG. 9. In this embodiment, a plurality of limiting structures is distributed on the limiting plate 31 to match the limiting assembly 34, so that the handle is fixed in different positions, and the lawn mower 100 may be in different use states or is convenient for storage. Specifically, the limiting plate 31 extends to form a first limiting structure 311, a second limiting structure 312 and a third limiting structure 313 in a direction away from the cross rod mounting plate 331, and the first limiting structure 311, the second limiting structure 312 and the third limiting structure 313 are arranged at intervals along the circumferential direction. Please refer to FIG. 1. When the handle assembly 30 is in a first position, the limiting assembly 34 is matched with the first limiting structure 311, the handle is arranged obliquely upwards along an X direction, and the lawn mower 100 is in a working state. Please refer to FIG. 10, when the handle assembly 30 is in a second position and the limiting assembly 34 is matched with the second limiting structure 312, the handle is arranged obliquely upwards along an opposite direction of the X direction, at this moment, the grass catcher 1001 may be disassembled from the tail plate 12 and suspended on the cross bar 33. And when the handle is in the second position, since a direction of the handle is arranged obliquely upward along the opposite direction of the X direction, the handle is stabilized in the second position due to an effect of gravity of the suspending grass catcher 1001 and a supporting effect of the blocking plate. Please refer to FIG. 11, when the handle assembly 30 is in a third position and the limiting assembly 34 is matched with the third limiting structure 313, the handle is arranged along the opposite direction of the X direction, and the lawn mower 100 may be placed vertically at this moment, so that the rear wheel 103 of the lawn mower 100 and the supporting plate 314 are in contact with a ground to play a supporting role, and a storage of the lawn mower 100 is convenient. It should be noted that the supporting plate 314 is fixedly connected or integrally formed with the limiting plate 31.

Please refer to FIG. 1, FIG. 6 through FIG. 11. In this embodiment, a first limiting mechanism 311 is provided with a first limiting hole 3111, a third limiting mechanism 311 is provided with a second limiting hole 3131, and a spring pin 341 on the limiting assembly 34 is matched with the first limiting hole 3111 or the second limiting hole 3131 to fix the handle assembly 30 in the first position or the third position, so that the lawn mower 100 is in the working state or a storage state. The second limiting mechanism 312 is a blocking plate, and the handle assembly 30 is in the second position through a cooperation of the blocking plate and the spring pin 341handle assembly.

Please refer to FIG. 1, FIG. 6 through FIG. 11. In this embodiment, specifically, the limiting assembly 34 includes the spring pin 341, a connecting piece 342, a spring 343, a column pin 344 and a steel wire rope 345. One end of the spring pin 341 is fixedly connected with the connecting piece 342, and an oblong through hole 3421 is arranged on the connecting piece 342. The column pin 344 passes through the handle and the rotating component 321 to fix the handle on the limiting plate 31. The handle may rotate about the column pin 344, the connecting piece 342 is provided with the oblong through hole 3421, and the column pin 344 passes through the oblong through hole 3421 to prevent the pulling of the connecting piece 342 being affected when an angle of the handle is adjusted. The column pin 344 is fixedly connected with the handle, and the spring 343 is sleeved on the spring pin 341, and is located between a gasket 3411 on a front end of the connecting piece 342 and the spring pin 341. A first end of the steel wire rope 345 is connected with the connecting piece 342, and a second end of the steel wire rope 345 is connected with the cross rod mounting plate 331. When the handle needs to be rotated, through pulling the cross rod 33, the cross rod mounting plate 331 is driven to move upwards along the second notch 322 on the handle, so that the spring pin 341 is retracted into the handle, then the spring pin 341 is separated from the first limiting structure 311, the second limiting structure 312 or the third limiting structure 313, which allows the handle to rotate freely. When the handle is rotated to a required position, the cross rod 33 is released, and the elastic pin 341 automatically resets, so as to match the first limiting structure 311, the second limiting structure 312 or the third limiting structure 313, so that the handle assembly 30 is fixed at the first position, the second position or the third position. In this embodiment, through one hand, the handle assembly 30 can be fixed to the required position, and when an operator stands on a left side, right side, rear of lawn mower 100, the operator can pull the cross rod 33, and it is very convenient to operate.

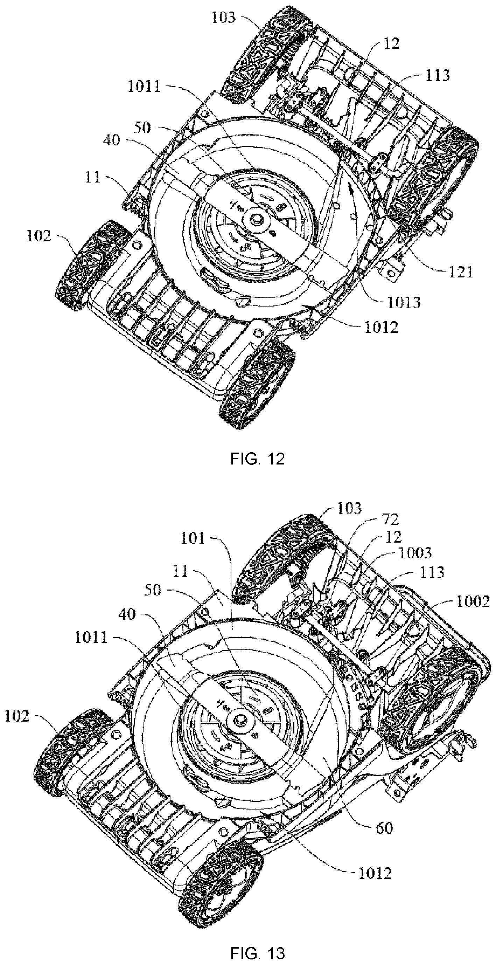

Please refer to FIG. 1 and FIG. 12. In this embodiment, an annular boss 1011 is arranged at a middle position of a bottom of the blade accommodating cavity 101, and the output shaft of the driving assembly 50 is located at a middle position of the annular boss 1011, so that the blade assembly 40 may be easily mounted. And a first lawn collection passage 1012 is formed between the annular boss 1011 and a side wall of the blade accommodating cavity 101, a second lawn collection passage 1013 is formed between the tail plate 12 and the base plate 11, and a depth of the first lawn collection passage 1012 gradually increases along its circumferential direction, and is communicated with the second lawn collection passage 1013 at its deepest depth.

Please refer to FIG. 1, FIG. 11 and FIG. 12. The lawn mower 100 is provided with two working modes: lawn storage mode and lawn crushing mode. When the lawn mower 100 is in the lawn storage mode, the lawn that is cut down by the blade assembly 40 is discharged into the grass catcher 1001 mounted at a tail of the lawn mower 100 along the second lawn collection passage 1013, so that a lawn storage may be realized. When the lawn mower 100 is in the lawn crushing mode, a rear block 60 needs to be mounted, and a bottom of the tail plate 12 is provided with a connection 121 for connecting with the rear block 60, so that the rear block 60 is mounted at a junction of the second lawn collection passage 1013 and the blade accommodating cavity 101, the second lawn collection passage 1013 is separated from the blade accommodating cavity 101, and the blade accommodating cavity 101 forms a complete cavity space. Cut lawn cannot enter the second lawn collection passage 1013, so that the cut lawn can only be continuously cut by a blade in the blade assembly 40 in the blade accommodating cavity 101, so as to crush the lawn, and the crushed lawn may fall directly to the ground.

Please refer to FIG. 1, FIG. 12 through FIG. 16. In this embodiment, the rear block 60 includes a first blocking plate 61, a second blocking plate 62 and a fixing plate 63, the first blocking plate 61 is an arc-shaped blocking plate, and a curvature of the arc-shaped blocking plate matches a curvature of a sidewall of the blade accommodating cavity 101, so as to facilitate the installation of the rear block 60. The second blocking plate 62 is fixedly connected with one side of the first blocking plate 61 along an arc direction of the first blocking plate 61, and the second blocking plate 62 is matched with the first lawn collection passage 1012. At the same time, one side of the second blocking plate 62 away from the first blocking plate 61 is bent upwards to one side away from the first blocking plate 61, so as to facilitate to completely block a gap between the second blocking plate 62 and the first lawn collection passage 1012. While the fixing plate 63 is fixed on one side of the first blocking plate 61 away from the second blocking plate 62, which is used for being fixedly connected with the tail plate 12 to separate the second lawn collection passage 1013 from the blade accommodating cavity 101.

Please refer to FIG. 1, FIG. 12 through FIG. 16. In addition, it should be noted that a surface of the second blocking plate 62 is an arc surface, so as to prevent the cut lawn from staying on the second blocking plate 62, which may cause blockage and affect an effect of lawn crushing, and may also better close the lawn collection passage. And a plurality of reinforcing ribs 622 are arranged on a bottom surface of the second blocking plate 62, so as to improve a strength of the second blocking plate 62, so that it is not easy to deform. It should be noted that, in this embodiment, the first blocking plate 61, the second blocking plate 62 and the fixing plate 63 are in an integrally formed structure, so as to improve a strength of them.

Please refer to FIG. 1, FIG. 12 through FIG. 17. In this embodiment, the fixing plate 63 is provided with a plurality of limiting holes 631, each limiting hole 631 is correspondingly provided with at least two elastic hole walls 632, and the at least two hole walls 632 are arranged at intervals along a circumferential direction of the limiting hole 631, and are located at a bottom of the fixing plate 63 to be fixedly connected with the tail plate 12. In this embodiment, the rear block 60 is fixedly connected with the tail plate 12 through a fixing component 64, and the fixing component 64 is matched with the limiting hole 631. Specifically, the fixing component 64 includes a head structure 641 and a tail structure 642, the head structure 641 is a spherical structure or an elliptical structure for example, and the tail structure 642 is a self-tapping screw for being connected with the tail plate 12. When it is needed to mount the rear block 60, first the fixing component 64 is connected with the connection 121 of tail plate 12, then the limiting hole 631 of rear block 60 is aligned with the head structure 641 of fixing component 64. Since the hole wall 632 at the limiting hole 631 place is elastic, the rear block 60 is pressed down by force, the head structure 641 of fixing component 64 may be pressed into the limiting hole 631, in order to fix the rear block 60 on the tail plate 12.

Please refer to FIG. 1, FIG. 12 through FIG. 17. When it is needed to take out the rear block 60, the rear block 60 is held by hands and pulled up forcibly, and the limiting hole 631 of the rear block 60 may be easily removed from the head structure 641 of the fixing component 64. In addition, it should be noted that a plurality of protruding blocks 633 are arranged on the bottom of the fixing plate 63, and the plurality of protruding blocks 633 is located around the limiting hole 631 to improve a strength of the periphery of the limiting hole 631 of the rear block 60, and ensure that a surrounding area of the limiting hole 631 is not destroyed when the rear block 60 is pressed down and pulled up. And this structure is simple and convenient to manufacture, the structure is firm and durable, there is no phenomenon of stagnation, and a positioning is accurate after loading, so as to ensure that the rear block 60 does not loosen when subjected to impact force.

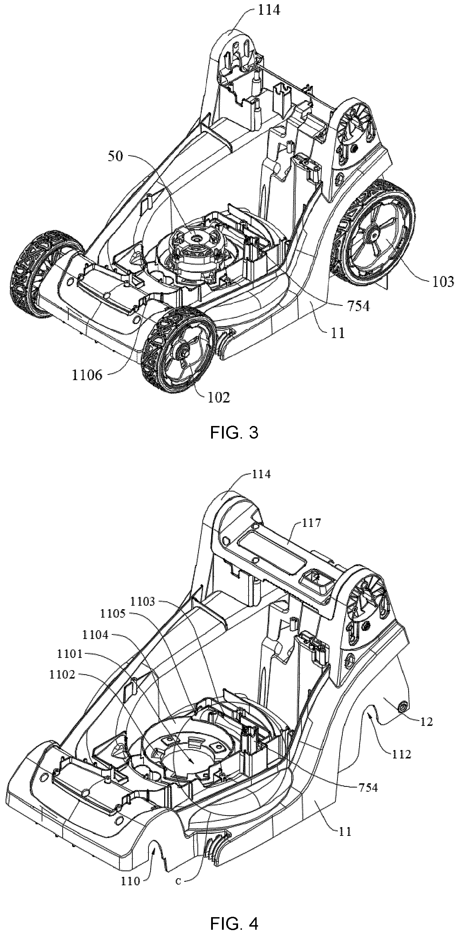

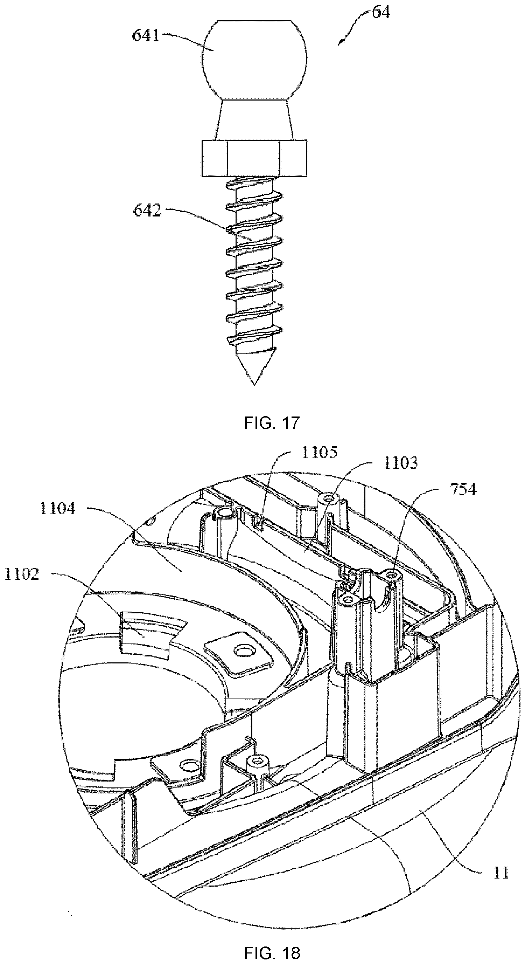

Please refer to FIG. 4 and FIG. 18. When the electric lawn mower is working, a motor, an electrical part and other parts of the lawn mower will generate heat. When it reaches a certain temperature, the machine will fail, so it is necessary to ensure a heat dissipation effect of the lawn mower to ensure that a heat can be effectively and timely dissipated, so as to avoid that the motor and the electrical part cannot work because of overhigh temperature. In a same way, when flowing air enters the lawn mower and passes through the motor, there will be dust in air and accumulates inside the lawn mower or enters the motor, thereby affecting a normal operation of the motor. Therefore, when dissipating heat, it must also pay attention to dust prevention. Specifically, please refer to FIG. 18 through FIG. 22, a battery pack accommodating cavity 115 is on the chassis 10 for mounting a battery pack. The battery pack provides power supply for the lawn mower 100, to drive the blade assembly 40 to rotate, and a motor cover 116 is arranged on a bottom of one side of the battery pack accommodating cavity 115 close to the tail plate 12, so that a motor 50 and electrical components are covered. It should be noted that a certain gap is left between a bottom surface of the battery pack accommodating cavity 115 and the base plate 11 to ensure that sufficient air enters an inside of the lawn mower. At the same time, a motor mounting hole 1101 is arranged on the base plate 11 and used for mounting the motor 50. There is a bending structure between the gap between the bottom surface of the battery pack accommodating cavity 115 and the base plate 11 and a plane where the motor mounting hole 1101 is located, so as to avoid excessive dust entering an inside of the motor 50, thereby affecting the normal operation of the motor 50.

In this embodiment, the motor 50 is mounted at the motor mounting hole 1101, an air inlet passage 1152 is formed between the battery pack accommodating cavity 115 and the base plate 11. The air inlet passage 1152 leads into the motor cover 116, so that an air intake from a front end of the lawn mower 100 is convenient, and it is passed into the motor cover 116 to dissipate heat for the motor 50 and the electrical components. In addition, the air entering from the front end of the lawn mower 100 should pass through at least one bending part 1153 in the air inlet passage 1152, so as to easily block dust from entering the inside of the motor.

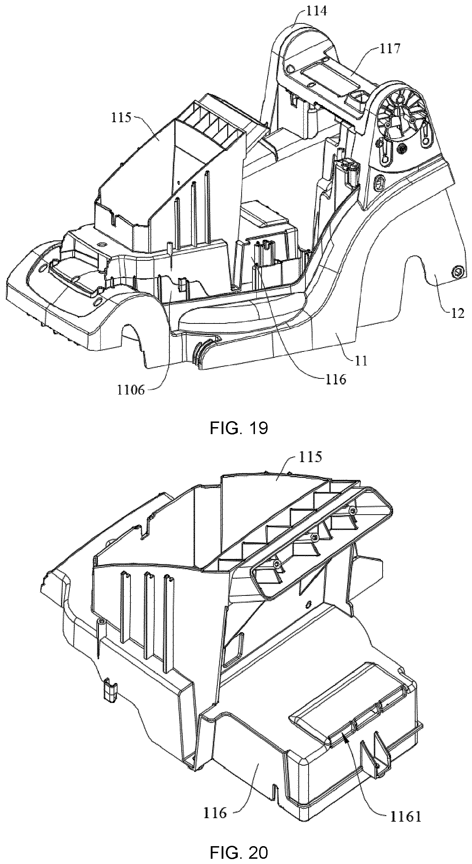

In this embodiment, please refer to FIG. 19 through FIG. 24. The chassis 10 is provided with the cover casing 20, and a front side of the cover casing 20 is provided with a first air inlet 21. Air that enters the inside of the lawn mower 100 from the first air inlet 21 enters the air inlet passage 1152 from an air inlet, and enters the motor cover 116 from an air outlet to dissipate heat for the motor 50 and the electrical components. Moreover, the air passing through the air inlet passage 1152 will pass through a cavity wall of the battery pack accommodating cavity 115, and then the battery pack in the battery pack accommodating cavity 115 may be cooled, so as to avoid the battery pack from failing due to an excessive temperature.

Specifically, one end of the air inlet passage 1152 that communicates with the motor cover 116 is close to a bottom of the motor 50, which means close to a plane where the motor mounting hole 1101 is located. In addition, in this embodiment, a housing of the motor 50 is likewise provided with a plurality of gap through holes 501. The bottom of the motor 50 is provided with an impeller 502, the impeller 502 is fixedly connected with an output shaft of the motor 50, a plurality of impeller blades 503 is arranged on one side of the impeller 502 close to the motor 50, and the impeller 502 is also used for mounting the blade assembly 40.

When the motor 50 drives the blade assembly 40 to rotate, the impeller 502 also rotates with the blade assembly 40, and under a rotation of the impeller 502 to drive air flow, external air enters the inside of the lawn mower from the first air inlet 21 on a front side of the lawn mower, and enters the motor cover 116 through the air inlet passage 1152. Since one end of the air inlet passage 1152 communicated with the motor cover 116 is close to the bottom of the motor 50, the entering air may move upwards outside of the housing of the motor 50 and along the bottom of the motor 50, and then be discharged from a top of the motor 50 through the gap through hole 501 on the motor 50, to achieve a heat dissipation effect on this motor 50.

It should also be noted that under the rotation action of the impeller 502, when the motor 50 is dissipated with the flowing air entering the inside of the lawn mower, dust often enters the inside of the lawn mower along with the flowing air, thereby further entering the motor 50 and affecting the normal operation of the motor. Therefore, in this embodiment, at least one bending part 1153 is arranged in the air inlet passage 1152, and the air entering from the front end of the lawn mower 100 passes through at least one of the bending parts 1153 in the air inlet passage 1152, so as to prevent dust from entering the inside of the motor.

**At** the same time, in this embodiment, a plurality of inclined surface structures 1102 is arranged at intervals along a circumferential of the motor mounting hole 1101. When there is dust with the flowing air entering the lawn mower 100, the dust may be discharged through the inclined surface structure 1102 in time, which prevents dust from accumulating in the lawn mower 100 or entering the inside of the motor 50 and then affecting the normal operation of the motor.

It should also be noted that in this embodiment, a decorative cover 211 is further arranged at the first air inlet 21, a honeycomb ventilation hole is arranged on the decorative cover 211 to facilitate air intake. And an air filter 1154 is further mounted on an inner side of the decorative cover 211 to further filter the air entering the inside of the lawn mower, thereby reducing the dust that enters the inside of the lawn mower. In this embodiment, the air filter 1154 is for example a dustproof sponge. In addition, the decorative cover 211 is provided with two bosses 2111 for being inserted into the two grooves 104 on a front side of the cover casing 20 during assembly, so that the decorative cover 211 effectively presses the air filter 1154, and the air entering from the first air inlet 21 will first pass through the air filter 1154 to realize its purification treatment. The dust will be filtered out by the air filter 1154, so that a large amount of dust may be avoided from entering the lawn mower 100.

In addition, the tail of the lawn mower is further provided with a second air inlet 1173, a plurality of blocking plate 1103 is arranged on one side of the motor mounting hole 1101 close to the tail plate 12. The plurality of blocking plates 1103 is fixedly connected with a plate component 1104 arranged around an outside of the motor mounting hole 1101 to form an electrical component mounting place for mounting the electrical components. And a plurality of openings 1105 is arranged on the blocking plate 1103 to facilitate an air intake from the second air inlet 1173 at a rear end of the lawn mower 100 to dissipate heat for the motor 50 and electrical components.

Specifically, please refer to FIG. 1, FIG. 25 and FIG. 26. A tail cover mounting base 117 is mounted between the handle mounting bases 114 at the tail of the lawn mower 100, a tail cover 118 is mounted on the tail cover mounting base 117, and the tail cover 118 is used for covering the grass catcher 1001. Specifically, the tail cover 118 is connected with the tail cover mounting base 117 through a rotating shaft 1171, and a spring component 1172 is sleeved on the rotating shaft 1171. When the tail cover 118 needs to be opened, the tail cover 118 rotates around the rotating shaft 1171, the spring component 1172 is compressed, when the tail cover 118 is released, under an elastic force of the spring component 1172, the tail cover 118 is reset and pressed tightly on the grass catcher 1001 under the action of elastic force.

Please refer to FIG. 1, FIG. 25 and FIG. 26. Specifically, the second air inlet 1173 is arranged at the rotating shaft 1171 so that the lawn mower 100 may take in air from a rear end. And in this embodiment, a vent 1161 is arranged on a top end of one side of the motor cover 116 away from the battery pack accommodating cavity 115, so that the air entering from the second air inlet 1173 enters the motor cover 116 from the vent 1161 to realize the heat dissipation effect on the motor 50 and the electrical components.

Please refer to FIG. 19 through FIG. 25. It should also be noted that similarly, the air that enters the inside of the lawn mower from the second air inlet 1173 is also accompanied by dust entering, therefore, an air filter (not shown) is mounted inside of the vent 1161 to filter the air that enters the inside of the lawn mower from the second air inlet 1173, so as to achieve an effect of dust removal and avoid excessive dust from entering the inside of the lawn mower 100.

In this embodiment, the electrical component is located in the motor cover 116, and is close to the vent 1161. After the air enters from the second air inlet 1173, the air passes through the vent 1161 and the electrical components, and enters the inside of the motor 50 again. In a process of machine running, motor 50 and the electrical components will generate heat, since the entering air at the rear end may pass through electrical components and enter the motor again, in this process the heat generated during working of electrical component and motor 50 is taken away, which avoids the electrical component and motor 50 from stopping working because of excessive temperature. In addition, in some embodiments, a protruding plate 1174 is formed by extending from the tail cover mounting base 1177 to the second air inlet 1173 to partially cover the second air inlet 1173.

Please refer to FIG. 1, FIG. 27 through FIG. 30. In this embodiment, the lawn mower 100 includes a height adjustment structure 70, different mowing heights are realized through this gear adjustment, and the height adjustment device 70 is provided with a plurality of different gears. Each gear corresponds to different mowing heights, so as to facilitate to adjust the mowing height according to needs in an actual mowing process. In this embodiment, the height adjustment mechanism 70 includes a front wheel axle 111, a rear wheel axle 113, a gear plate 71, a limiting rod 72 and a connecting arm 73. Specifically, the front wheels 102 and the front wheel axle 111, and the rear wheels 103 and the rear wheel axle 113 are all rotationally connected. The rear wheel axle 113 is connected with the tail plate 12 through a first pressing plate 1002, and the front wheel axle 111 is connected with a front end of base plate 11.

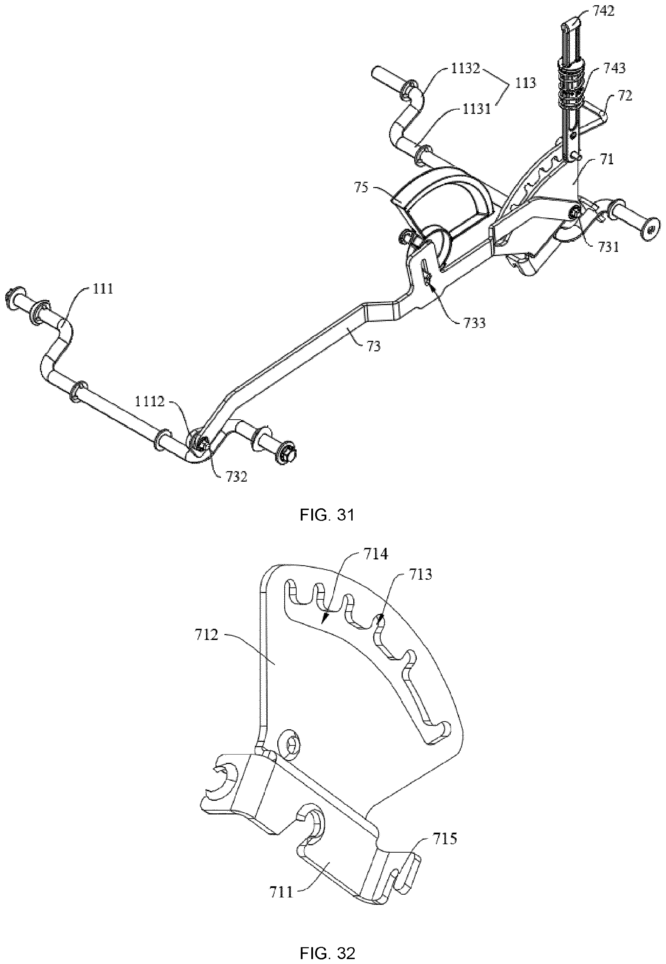

Please refer to FIG. 13 and FIG. 31. In this embodiment, a structure of the front wheel axle 111 and the rear wheel axle 113 is consistent. The rear wheel axle 113 is illustrated as an example, the rear wheel axle 113 includes a main part 1131 and a wheel axle parts 1132 symmetrically arranged at two ends of the main part 1131. In this embodiment, the wheel axle part 1132 is L-shaped, a first end of the wheel axle part 1132 is fixedly connected with the main part 1131, and a second end of the wheel axle part 1132 is rotatably connected with the rear wheel 103. Since the front wheel axle 111 and the rear wheel axle 113 are respectively connected with the base plate 11 and the tail plate 12, which means connected with the chassis 10 of the lawn mower 100. When the main part 1131 rotates to different positions, the chassis 10 is raised or lowered accordingly to realize adjusting a height of the lawn mower 100.

Please refer to FIG. 31 and FIG. 32. In this embodiment, the gear plate 71 includes a connecting part 711 and a gear part 712. The gear part 712 and the connecting part 711 are in an integrally formed structure for example. The connecting part 711 is fixedly connected with one end of the rear wheel axle 113. A plurality of gear grooves 713 is arranged on one side of the gear part 712 away from the connecting part 711. The plurality of gear grooves 713 communicate with each other through a sliding passage 714. The gear part 712 is a sector-shaped structure for example, and the plurality of gear grooves 713 and the sliding passage 714 are arranged along a circumferential direction of the sector-shaped structure. The limiting rod 72 matches the gear groove 713, and may be switched through the sliding passage 714. A first end of the limiting rod 72 is connected with the tail plate 12 through a second pressing plate 1003, and a second end of the limiting rod 72 is connected with an adjustment assembly 74 through passing through the sliding passage 714. When the limiting rod 72 is located in different gear grooves 713, it corresponds to different gears and heights. A first end of the connecting arm 73 is rotatably connected with the gear plate 71 through a first pin shaft 731, and a second end of the connecting arm 73 is rotatably connected with a connecting plate 1112 on the front wheel axle 111 through a second pin shaft 732. The connecting plate 1112 and the gear plate 71 are located on a same side of the lawn mower 100.

Please refer to FIG. 31 through FIG. 33. In this embodiment, the adjustment assembly 74 includes an adjustment button 741, an adjustment rod 742 and a reset spring 743. The adjustment button 741 is mounted on the tail cover mounting base 117. The adjustment button 741 includes an adjustment connecting arm 7411 and a key 7412. A first end of the adjustment connecting arm 7411 is rotatably connected with the tail cover mounting base 117, a second end of the adjustment connecting arm 7411 is connected with the adjustment rod 742, and the key 7412 is located on the second end of the adjustment connecting arm 7411 close to the adjustment connecting arm 742 and is protruding from the tail cover mounting base 117, so as to facilitate the operator to operate. The adjustment connecting arm 7411, the key 7412 and the tail cover mounting base 117 form a lever structure, so that a process of pressing is more labor-saving. The reset spring 743 is sleeved on the adjustment rod 742, a first end of the reset spring 743 abuts against a platform structure 7421 on the adjustment rod 742, and a second end of the reset spring 743 abuts against the tail plate 12. Under an effect of the reset spring 743, the pressed adjustment button 741 is reset to its original position.

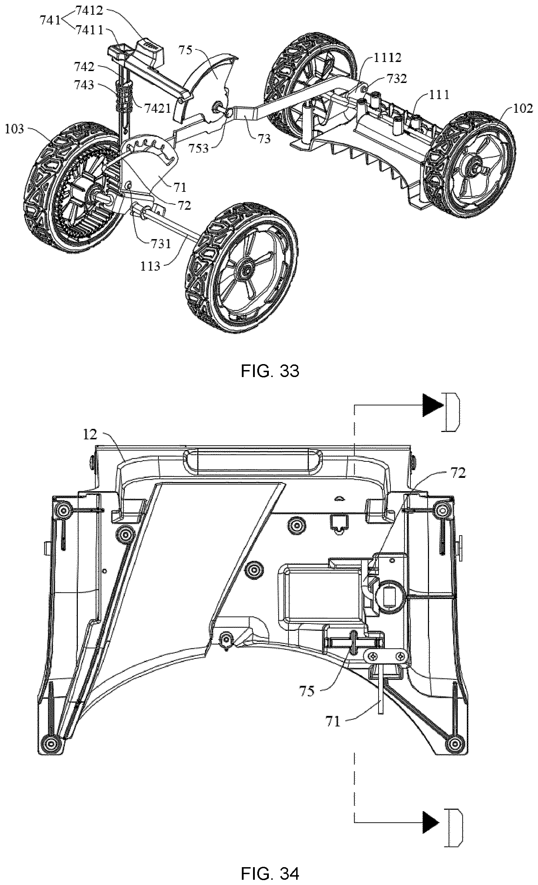

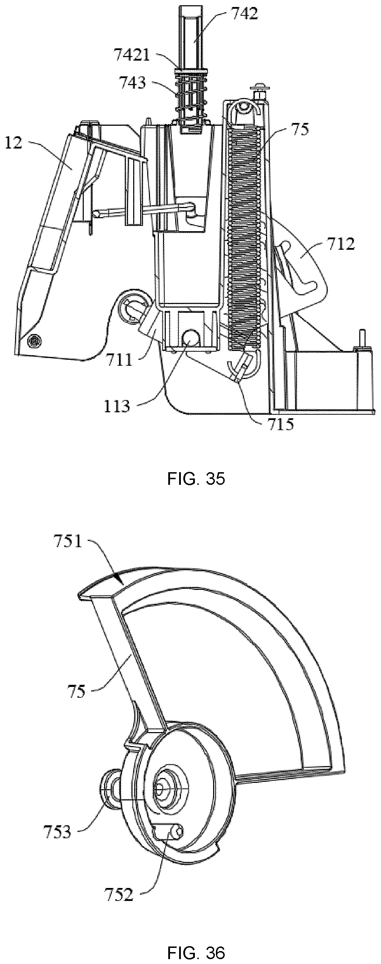

Please refer to FIG. 34 and FIG. 35. In this embodiment, the height adjustment mechanism further includes a reset component. In an embodiment of the disclosure, the reset component is a tension spring 75, the tension spring 75 is located on one side of the gear plate 71. One end of the tension spring 75 is connected with the tail plate 12, a second end of the tension spring 75 is fixedly connected with a tension spring hook 715 on the gear plate 71. When the height adjustment mechanism lowers the height, it plays a buffering role. When it raises the height, the gear plate 71 rotates under an action of the elastic force of the tension spring 75 to realize gear switching.

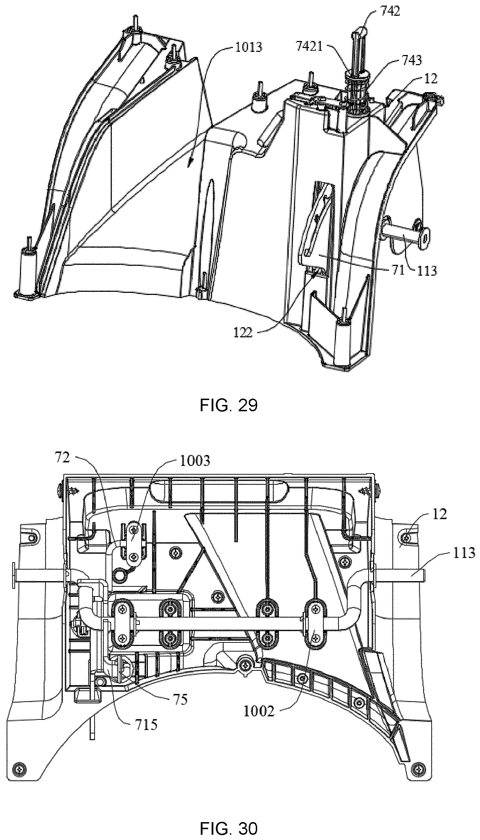

Please refer to FIG. 29, FIG. 31 through FIG. 36. In this embodiment, the tail plate 12 is provided with a first notch 122 near the gear plate 71, and the gear plate 71 is partially located in the first notch 122. When the gear plate 71 rotates, the first notch 122 plays a limiting role to the gear plate 71, which avoids causing excessive rotation. In addition, the connecting arm 73 is further provided with a mounting groove 733, which is used for mounting a gear indication plate 75. The gear indication plate 75 is a sector-shaped structure for example, and its surface is an arc surface 751. The arc surface 751 is provided with gear marks, such as 1, 2, 3... or I, II, III..., or similar marks.

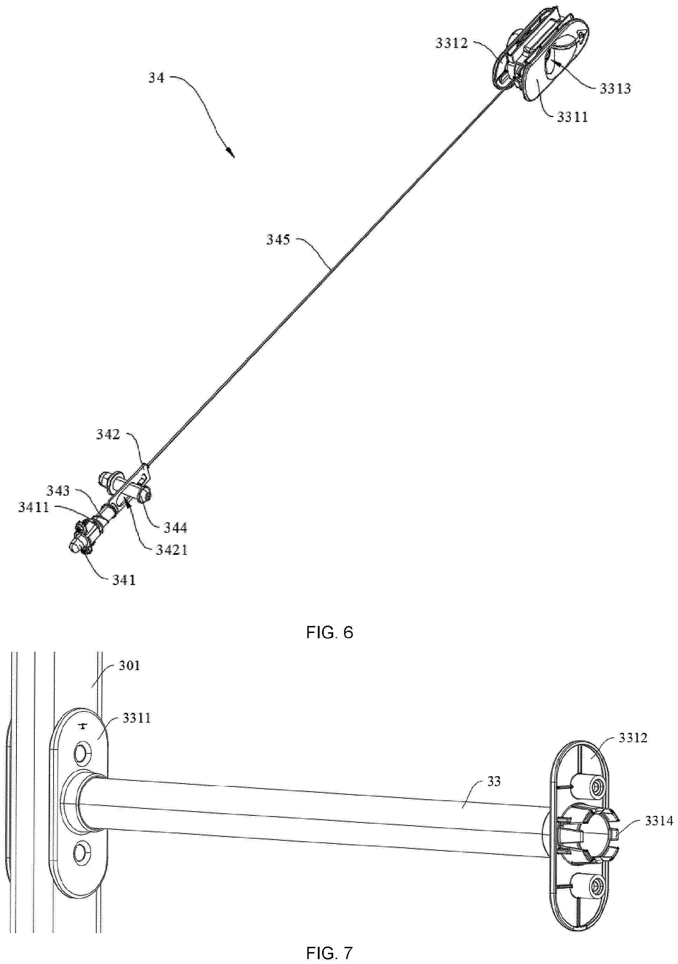

Please refer to FIG. 6, FIG. 29, FIG. 31 through FIG. 37. Two sides of the gear indication plate 75 are respectively fixed with a first column pin 752 and a second column pin 753. The first column pin 752 is connected with the mounting groove 733, the second column pin 753 is connected with a semi-circular groove 754 on the base plate 11 through a pressing plate. When adjusting the gear, the front wheel axle 111 and the rear wheel axle 113 rotate, and drive the connecting arm to rotate. The connecting arm 73 drives the gear indication plate 75 to rotate and enables the gear marks on the gear indication plate 75 to rotate to a specific marking place, so as to easily identify that the lawn mower 100 is in a certain gear.

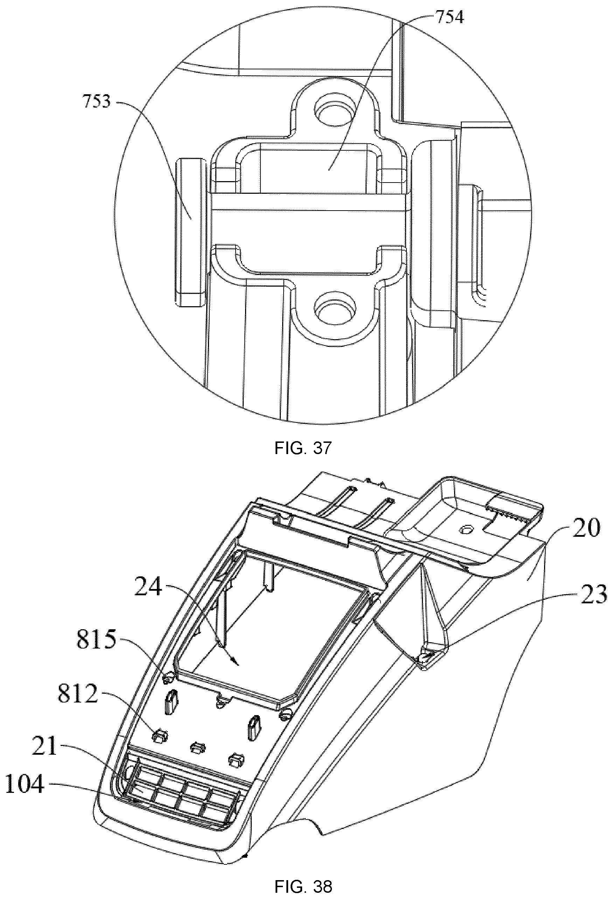

Please refer to FIG. 38. In addition, a marking hole 23 is arranged on the cover casing 20, and the marking hole 23 is located above the gear indication plate 75, so that the operator may observe the gear indication plate 75 from the marking hole 23, and when adjusting the gear, the gear can be adjusted through facing the gear indication plate 75. If a certain mowing height is needed, the corresponding gear is adjusted, of which a use process is very convenient. When the adjustment assembly adjusts the mowing height of the lawn mower, the mowing height can be displayed in the marking hole 23.

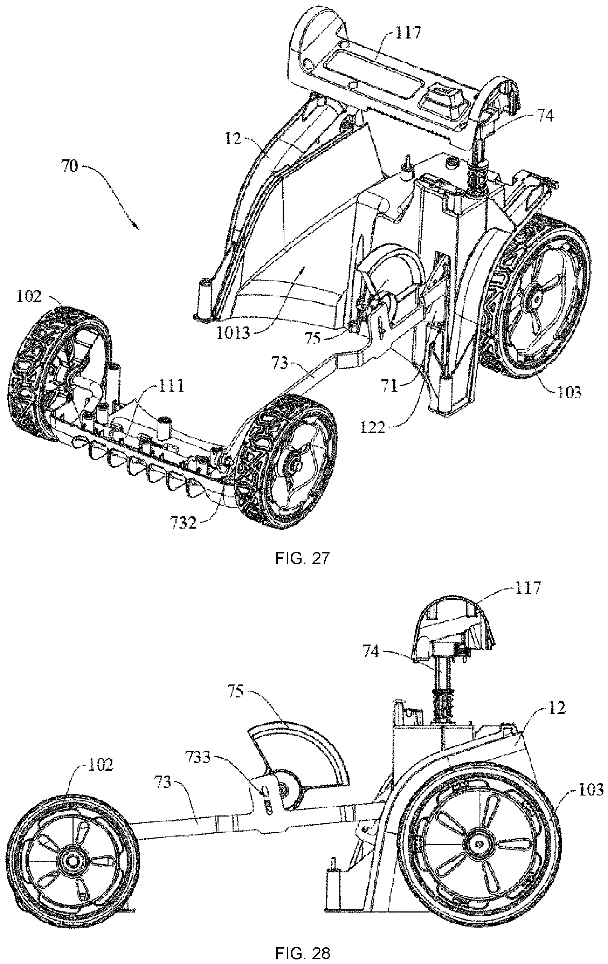

Please refer to FIG. 27 through FIG. 38. Specifically, a gear adjustment enables a height reduction process to be, pressing the adjustment button 741, enabling the adjustment rod 742 to be lowered thereby driving the limiting rod 72, and enabling the limiting rod 72 to be separated from a certain gear groove 713 and enter the sliding passage 714. At this moment, the front wheel axle 111 and the rear wheel axle 113 lose their limiting function, the operator presses down the lawn mower to enable the gear plate 71 to rotate, thereby driving the front wheel axle 111 and the rear wheel axle 113 to reduce a height of the chassis 10. When rotating, the limiting rod 72 slides in the sliding passage 714, and the tension spring 75 is elongated to play a role of buffering. When rotating to a specific required gear, the adjustment button 741 is loosened. Under an effect of reset spring 743, the adjustment rod 742 is reset, thereby driving the limiting rod 72 to enter another gear groove 713, and realizing a limiting, so that the front wheel axle 111 and the rear wheel axle 113 are locked, and a height adjustment is realized. A gear adjustment enables a height lifting process to be, pressing the adjustment button 741, enabling the adjustment rod 742 to be lowered thereby driving the limiting rod 72, and enabling the limiting rod 72 to be separated from a certain gear groove 713 and enter the sliding passage 714. At this moment, the front wheel axle 111 and the rear wheel axle 113 lose their limiting function, the gear plate 71 rotates under an elastic force of the stretched tension spring 75, thereby driving the front wheel axle 111 and the rear wheel axle 113 to lift the height of the chassis 10. When rotating to the specific required gear, the adjustment button 741 is loosened. Under the effect of reset spring 743, the adjustment rod 742 is reset, thereby driving the limiting rod 72 to enter another gear groove 713, and realizing a limiting, so that the front wheel axle 111 and the rear wheel axle 113 are locked, and the height adjustment is realized.

Please refer to FIG. 38. In this embodiment, the cover casing 20 is provided with a first through hole 24 to expose a cavity space of the battery pack accommodating cavity 115. A battery pack is mounted in the cavity space, so that the battery pack may be easily replaced. A flip cover mounting part is arranged on the cover casing 20, a flip cover structure 80 is mounted in the flip cover mounting part, and the flip cover structure 80 is used for covering the first through hole 24 to close the cavity space of the battery pack accommodating cavity 115, which is conducive to protecting the battery pack in this cavity space.

Please refer to FIG. 38 through FIG. 42. In this embodiment, the flip cover structure 80 includes a flip cover mounting base 81 and a first flip cover 82. A plurality of buckles 811 are arranged on a first side of an inner side of the flip cover mounting base 81, so as to be easily matched with a clamping groove 812 on the flip cover mounting part and mount the flip cover mounting base 81 on the cover casing 20. Then a bolt passes through the third through hole 813 on a second side of the flip cover mounting base 81 to firmly connect the flip cover mounting base 81 with the cover casing 20. After being fixed with the bolt, a front end of the flip cover mounting base 81 just presses the decorative cover 211, so that the decorative cover 211 is completely fixed.

One side of the flip cover mounting base 81 provided with the third through hole 813 is provided with a swing arm mounting groove 814 for connecting the first flip cover 82. A swing arm structure 821 is mounted on one side of the first flip cover 82, and the swing arm structure 821 includes a swing arm 8211 and a rotating shaft 8212. A first end of the swing arm 8211 is fixedly connected with an inner side of the first flip cover 82, a second end of the swing arm 8211 is fixedly connected with the rotating shaft 8212, and the rotating shaft 8212 of the swing arm structure 821 is mounted in the swing arm mounting groove 814, and is rotatably connected with each other, which means that the first flip cover 82 may rotate around the rotating shaft 8212.

Specifically, a mounting process of the flip cover structure 80 is as follows: firstly, the swing arm structure 821 of the first flip cover 82 is mounted in the swing arm mounting groove 814 to realize a mounting between the first flip cover 82 and the flip cover mounting base 81, then the buckle 811 of the flip cover mounting base 81 is inserted into the clamping groove 812 of the cover casing 20, and the third through hole 813 of the flip cover mounting base 81 is aligned with a threaded hole 815 of the cover casing 20 and is fixed by the bolt.

It should be also noted that in this embodiment, a plurality of reinforcing rib structures 83 are arranged on an inner side of the first flip cover 82 to enhance a strength of the flip cover structure 80.

Through arranging a plurality of limiting structures on the limiting plate and mounting the handle on the limiting plate, the cross rod controls a matching between the handle and the limiting structure, which allows the handle assembly to be fixed at different positions. And the handle assembly can be fixed to the required position by one hand, the operator can pull the cross rod at any position next to the lawn mower, and the operation is very convenient.

Through mounting the rear block at the lawn collection passage at the bottom of the lawn mower, and arranging the surface of the second blocking plate of the rear block to be an arc surface, the cut lawn is prevented from staying on the second blocking plate, which may produce the blockage, thereby affect the effect of the lawn crushing, and also may better seal the lawn collection passage. And the reinforcing ribs and the plurality of protruding blocks are arranged on the bottom of the fixing plate, which improves a structural strength of this rear block. And also through arranging the plurality of limiting holes on the fixing plate, and correspondingly arranging each limiting hole to be provided with at least two hole walls with certain elasticity, its disassembling and assembling process is more convenient. And a positioning is accurate after loading, which can guarantee that the rear block is not loose under a condition of being subjected to an impact force.

Through setting different air inlets, the heat dissipation effect of the driving assembly and the electrical components in the lawn mower is realized, which avoids the electrical components and the driving assembly from stopping working due to the excessive temperature. And also through arranging the air filter at the air inlet, arranging the air inlet passage to be provided with at least one bending part, and arranging a plurality of inclined surface structures at circumferential intervals of the motor mounting holes, the dust is prevented from entering the inside of the motor.

The height of the chassis is adjusted by switching gears, so as to adapt to different lawn types. And the height of the chassis can be adjusted according to a required mowing height, which can avoid being entangled by weeds and the like simultaneously, so that the height adjustment is safer and more obvious, and the operation is more convenient. And through arranging the marking hole above the cover casing, the gear of the lawn mower indicated by the gear indication plate can be checked in time and effectively through the marking hole, so that the adjustment may be carried out.

The flip cover structure on this lawn mower is fixed on the cover casing by the flip cover fixing base, its structure is simple, the fixing is reliable, and the mounting process is simple and convenient.

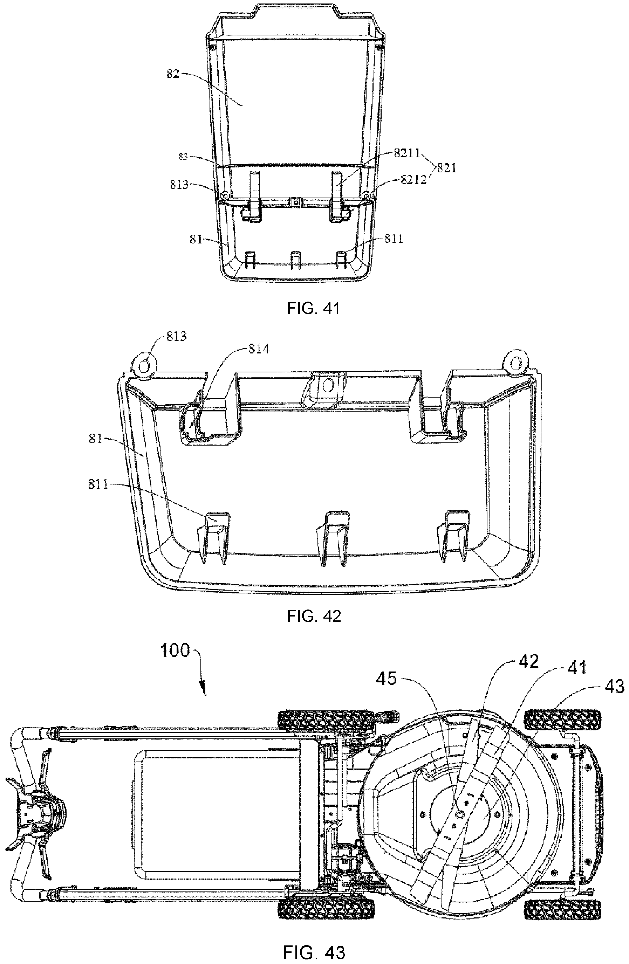

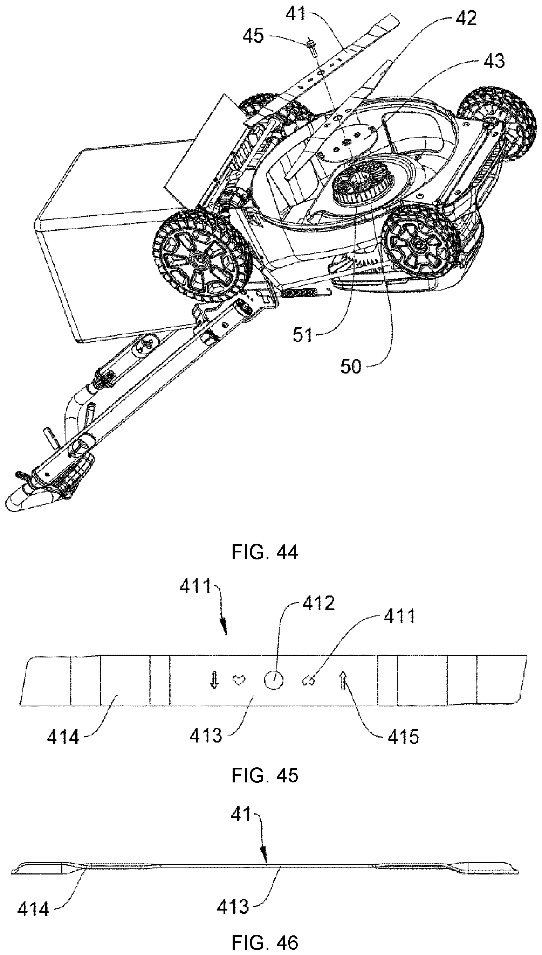

Please refer to FIG. 43 and FIG. 44. The embodiment further provides a blade assembly 40 applied to the lawn mower 100, and the blade assembly 40 adopts a double-layer blade structure. The blade assembly 40 is accommodated in a housing of the lawn mower and forms a cutting space in the housing. The blade assembly 40 includes a blade base 43 and a first blade 41 (lawn collection blade) and a second blade 42 (lawn crushing blade) assembled on the blade base 43.

Please refer to FIG. 45 and FIG. 46. The first blade 41 includes a first middle part 413 arranged in a flat plate shape and first cutting parts 414 located at both ends of the first middle part 413. The first middle part 413 may be in an elongated rectangular shape and is used for mounting to the blade base 43. In a longitudinal direction of the first middle part 413, the first cutting part 414 is twisted with respect to the middle part. One end of the first cutting part 414 is provided with a first cutting edge facing a rotating direction of a blade (a direction indicated by a rotating indication mark 415) for cutting the lawn into chips. An end of the first cutting part 414 away from the first cutting edge is formed with a lawn collection slope facing a blade rotating direction for collecting the lawn.

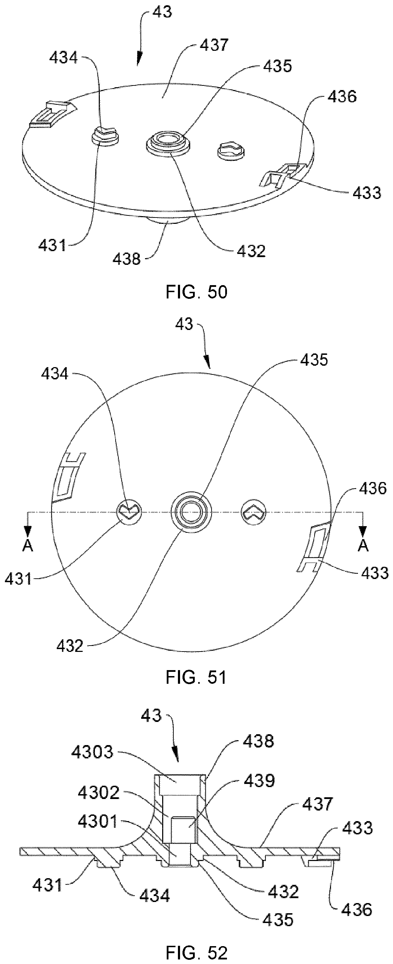

Please refer to FIG. 45 and FIG. 46. The first blade 41 is provided with a first mounting hole 412 that penetrates through the first blade 41 and is located at a center. Two sides of the first mounting hole 412 are each provided with a first positioning hole 411 that penetrates through the first blade 41. The first mounting hole 412 and the first positioning holes 411 are arranged along a longitudinal direction of the first blade 41 (as shown in FIG. 45), and of course the first mounting hole 412 and the first positioning holes 411 may also be arranged at a certain angle along the longitudinal direction of the first blade 41. This first positioning hole 411 may be an arrow hole with a foolproof function for example. The two arrow holes point in opposite directions, so that if the first blade 41 is reversed, it cannot be assembled, and a reverse assembly may be avoided. The arrow hole points to the blade rotating direction of the first blade 41 in the circumferential direction, and the two arrow holes are central symmetrical with a center of the first mounting hole 412. The blade base 43 is provided with two arrow bosses (please refer to FIG. 50 and FIG. 51), the two arrow bosses are matched with the two arrow holes on the first blade 41 respectively, and a positioning of the first blade 41 is realized. The arrow holes on both sides indicate opposite directions, but sizes of them are the same, and the first blade 41 may meet requirements of dynamic balance and static balance in principle. It should be pointed out that the arrow holes may also be designed to be non-centrally symmetrical.

Please refer to FIG. 45 and FIG. 46. A bottom surface of the first blade 41 (which means one side surface away from the blade base 43) is provided with the rotating indication mark 415, and there are two rotating indication marks 415, which are arranged symmetrically in the center of the first mounting hole 412 respectively. It should be noted that a pointing of the arrow hole may be oriented towards the blade rotating direction of the first blade 41. A direction of the arrow hole of the first blade 41 serves as a blade rotating indication function, which is integrated with a rotation indication function. Therefore, the rotating indication mark 415 may not be arranged on the first blade 41.

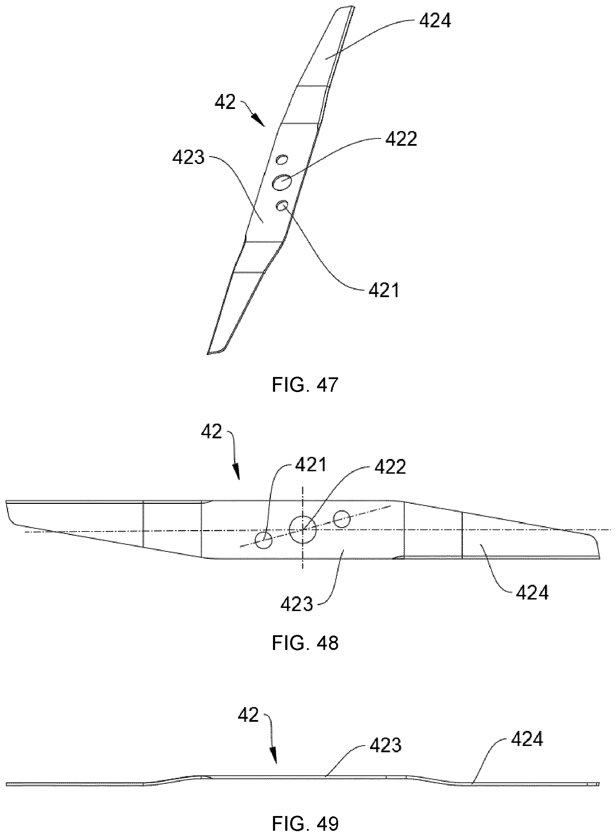

Please refer to FIG. 47 through FIG. 49. In order to achieve a better cutting effect and facilitate distinction, the second blade 42 is distinguished from the first blade 41 in shape and structure. The second blade 42 includes a second middle part 423 arranged in a flat plate shape and second cutting parts 424 arranged at two ends of the second middle part 423 respectively. The second middle part 423 may be in an elongated rectangular shape for being mounted to the blade base 43, and the second cutting part 424 is bent and arranged on one side of the second middle part 423 towards the blade base 43. The second cutting part 424 is bent toward one side close to the blade base 43, and one end of the second cutting part 424 away from the second middle part 423 is arranged parallel to the second middle part 423, which means that the second cutting part 424 is bent toward one side close to the blade base 43. An end of the second cutting part 424 facing the blade rotating direction is provided with a second cutting edge, which is used for cutting lawn into chips.

Please refer to FIG. 47 and FIG. 49. The second blade 42 is provided with a second mounting hole 422 that penetrates through the second blade 42 and is located at a center. Two sides of the second mounting hole 422 are each provided with a second positioning hole 421 that penetrates through the second blade 42. The second mounting hole 422 and the second positioning holes 421 are arranged at a certain angle with a longitudinal direction of the second blade 42 (please refer to FIG. 47 and FIG. 48), so that when the second blade 42 and the first blade 41 are assembled on the blade base 43, the second blade 42 and the first blade 41 will be at a same angle. Of course, the second mounting hole 422 and the second positioning holes 421 may also be arranged along the longitudinal direction of the second blade 42. In this embodiment, a size of the second mounting hole 422 of the second blade 42 is greater than a size of the first mounting hole 412 of the first blade 41, and a size of the second positioning hole 421 of the second blade 42 is greater than a size of the first positioning hole 411 of the first blade 41.

Please refer to FIG. 50 through FIG. 52. The blade base 43 includes a blade base body 437 and a central boss 438 arranged at a top surface center of the blade base body 437, and a diameter of the central boss 438 is gradually reduced from a bottom end to a top end and then remains constant.

A bottom surface of the blade base body 437 (a blade assembly surface) is provided with a first step-shaped boss and two second step-shaped bosses. The first step-shaped boss is arranged at a center position of the bottom surface of the blade base body 437, and the two second step-shaped bosses are centrally symmetrically arranged with respect to a center of the first step-shaped boss. It should be noted that, in some embodiments, the bottom surface of the blade base body 437 may also be provided with only one second step-shaped boss, and the second step-shaped boss is positioned at a side of the first step-shaped boss.

Please refer to FIG. 50 through FIG. 52. The first step-shaped boss includes a first boss 435 and a second boss 432 coaxially arranged on the bottom surface of the blade base body 437. The first boss 435 matches the first mounting hole 412, and the second boss 432 matches the second mounting hole 422. The second boss 432 is located between the first boss 435 and the blade base body 437, projections of the second boss 432 and the first boss 435 on the bottom surface of the blade base body 437 is a nested relationship, and a profile of the first boss 435 is located in a profile of the second boss 432. A height of the first boss 435 is defined as a first height, and a height of the second boss 432 is defined as a second height, wherein the first height is greater than the second height. As an example, the first height ranges from 5mm to 8mm, e.g. 5mm, 6mm, 7mm, or 8mm, and the second height ranges from 2mm to 4mm, e.g. 2mm, 3mm, 4mm.

Please refer to FIG. 50 through FIG. 52. The second step-shaped boss includes a second positioning boss 431 matched with the second positioning hole 421 and a first positioning boss 432 matched with the first positioning hole 411, both of them are coaxially arranged on the bottom surface of the blade base body 437. The second positioning boss 431 is located between the first positioning boss 434 and the blade base body 437, projections of the second positioning boss 431 and the first positioning boss 434 on the bottom surface of the blade base body 437 is a nested relationship, and a profile of the first positioning boss 434 is located in a profile of the second positioning boss 431. The second positioning boss 431 and the second boss 432 are used as a mounting structure of the second blade 42 for mounting the second blade 42, and the first positioning boss 434 and the first boss 435 are used as a mounting structure of the first blade 41 for mounting the first blade 41. As an example, the first positioning boss 434 may be an arrow boss or a boss with a foolproof function of other suitable shapes, and two arrow bosses that are centrally symmetrically arranged about a center of the first boss 435 are more conducive to a torque transmission of the rotating output shaft 51 to the blade. It should be noted that a matching of any of the above mounting holes and the corresponding positioning boss means that heights of the two are the same and shapes are matched with each other.

Please refer to FIG. 50 through FIG. 52. In some embodiments, in order to be able to form a better supporting effect on the first blade 41, two supporting bosses 433 are arranged on an edge of the blade assembly surface of the blade base 43, and the two supporting bosses 433 are centrally symmetrically arranged with respect to a center of the blade base 43. The supporting boss 433 is in an L-shaped structure. The supporting boss 433 is provided with a supporting surface 436 for supporting the first blade 41, and the supporting surface 436, the second boss 432, and the second positioning boss 431 are of the same height, so that when the first blade 41 is assembled on the blade base 43, two ends of the first middle part 413 of the first blade 41 may be supported on the supporting surface 436 of the supporting boss 433. It is understandable that, in some embodiments, only one supporting boss 433 may be arranged on the edge of the blade assembly surface of the blade base 43.

Please refer to FIG. 50 through FIG. 42. A center of the blade base 43 is provided with a step-shaped output shaft mounting hole that penetrates through the central boss 438 and the blade base body 437. The output shaft mounting hole sequentially includes a first aperture section 4303, a second aperture section 4302 and a third aperture section 4301 that are coaxial and have successively smaller diameters arranged from one end close to the rotating output shaft 51 to one end away from the rotating output shaft 51. The first aperture section 4303 and the second aperture section 4302 are for the rotating output shaft 51 to pass through. The third aperture section 4301 is for a fastening bolt 45 (a fastener) to pass through. When the rotating output shaft 51 is connected and fixed with the blade base 43, a free end of the rotating output shaft 51 passes through the first aperture section 4303 and the second aperture section 4302 sequentially from a top end of the output shaft mounting hole, and the fastening bolt 45 is threaded with the free end of the rotating output shaft 51 after passing the third aperture section 4301 from a bottom end of the output shaft mounting hole, so that the blade assembly 40 is assembled on the rotating output shaft 51.

Please refer to FIG. 50 through FIG. 52. A bottom of the second aperture section 4302 (one end close to the third aperture section 4301) is provided with a driven transmission structure, the free end of the rotating output shaft 51 is provided with a driving transmission structure (not indicated), when the fastening bolt 45 is inserted into the bottom of the second aperture section 4302, the driven transmission structure 439 in the second aperture section 4302 and the driving transmission structure of the rotating output shaft 51 constitute a transmission fit. With a rotation of the rotating output shaft 51, the blade base 43 drives the first blade 41 and the second blade 42 to rotate and carry out the mowing operation. For example, the driving transmission structure of the rotating output shaft 51 may be arranged on a notch of the free end of the rotating output shaft 51, and the driven transmission structure is a protruding block 309 arranged at the bottom of the second aperture section 4302 and matching the notch. It is understandable that, in other embodiments, the driving transmission structure and the driven transmission structure may be arbitrary structures capable of realizing the transmission fit, such as a driving ratchet and a driven ratchet of the transmission fit, driving convex teeth and driven convex teeth of the transmission fit, or protrusions extending to opposite directions for transmission fit, etc.

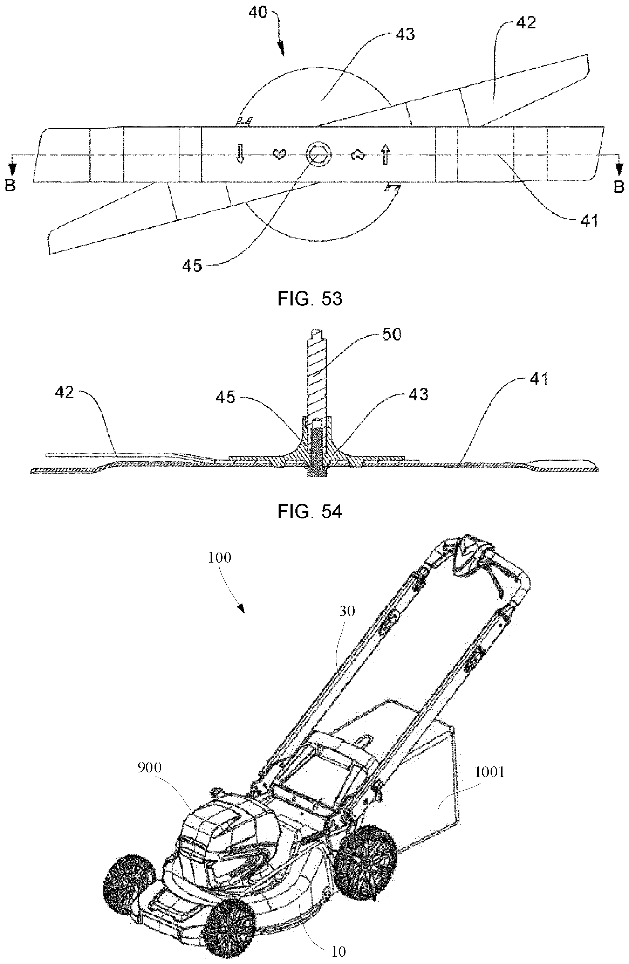

Please refer to FIG. 53 and FIG. 54. When assembling the mowing assembly, the positioning mounting hole (the second mounting hole 422 and the second positioning hole 421) on the second blade 42 are first assembled on the mounting structure of the second blade 42 after passing through the first blade 41. Then the first blade 41 is assembled on the mounting structure of the first blade 41, the first blade 41 is stacked on the second blade 42 and the first blade 41 and the second blade 42 are dislocated from each other, which means that the first blade 41 and the second blade 42 are arranged at a certain angle. The first blade 41 and the second blade 42 may complete two cuts to the lawn. The cutting edge of the first blade 41 is positioned in front of the cutting edge of the second blade 42. When cutting, the first blade 41 first cuts the lawn, and then the second blade 42 cuts the lawn again, so that a better lawn crushing effect may be achieved.

When the first blade 41 is separately assembled, since a positioning and the mounting structure of the second blade 42 is large in size, it may support the first blade 41 and a position of the first blade 41 may remain unchanged. In addition, when the supporting boss 433 is arranged on the blade base 43, the supporting boss 433 may work with the positioning and the mounting structure of the second blade 42 and simultaneously support the first blade 41.

Through arranging the step-shaped boss to position and mount the blade on the blade base, it is more convenient to realize an assembly and replacement of double blades. The blade assembly 40 of the disclosure may avoid a reverse assembling of the blade by foolproof structures on the blade base and the blade. Through arranging a step-shaped positioning mounting boss of the blade on the blade base, when the first blade 41 is separately assembled, it may support the first blade and the position of the first blade may remain unchanged.

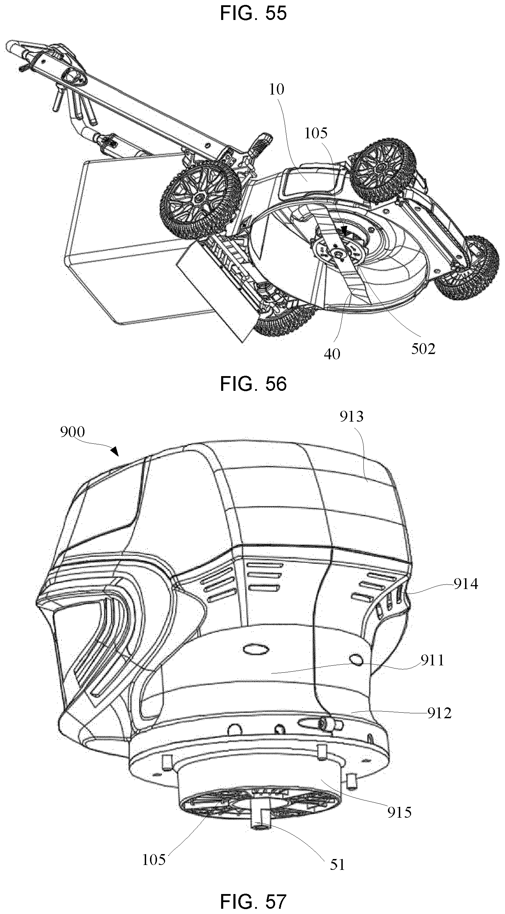

Please refer to FIG. 55. The embodiment further provides a lawn mower 100. The lawn mower 100 may include the handle assembly 30, a power head 900, the chassis 10, a walking wheel and a grass catcher 1001. The handle assembly 30 is obliquely arranged on the chassis 10, and the handle assembly 30 may extend from a rear direction of the chassis 10. The power head 900 may be arranged on the chassis 10. The walking wheel may be arranged at the bottom of the chassis 10, and the grass catcher 1001 for collecting crushed lawn is arranged at a rear of the chassis 10.

Please refer to FIG. 55. In this embodiment, as a replaceable component, the power head 900 can replace a small internal combustion engine and may be applied to a variety of devices, such as outdoor power tools, including lawn mowers, snow throwers, cleaning machines, scarifiers, etc. The embodiment will take the lawn mower as an example, and a specific structure and function of the power head 900 are described in detail, but should not be limited to this.

Please refer to FIG. 55 through FIG. 56. In this embodiment, an air outlet 105, the impeller 502 and the blade assembly 40 are arranged at the bottom of chassis 10. A motor output shaft in the power head 900 may extend to the bottom of the chassis 10, the impeller 502 and the blade assembly 40 may be connected with the motor output shaft, and the impeller 502 may be located above the blade assembly 40. The air outlet 105 may be arranged on the driving assembly, and the driving assembly is a motor. When the lawn mower 100 is in a working condition, the motor output shaft drives the impeller 502 and blade assembly 40 to rotate, a rotation of the impeller 502 may guide air flow in the power head 900, and a rotation of the blade assembly 40 may carry out the mowing operation.

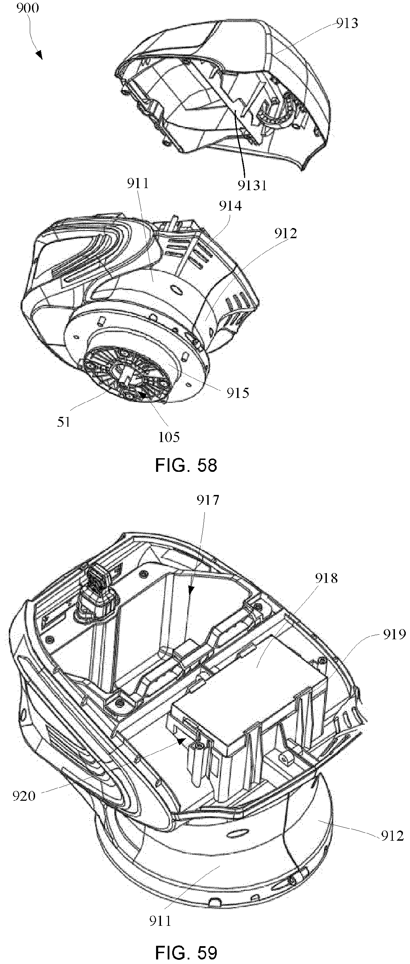

Please refer to FIG. 57 through FIG. 58. In this embodiment, the power head 900 may further include a first housing 911, a second housing 912 and a cover 913. The first housing 911 and the second housing 912 are arranged opposite to each other. For example, the first housing 911 and the second housing 912 are arranged left and right to form a housing. Structures of the first housing 911 and the second housing 912 may be the same. The cover 913 is arranged at a top of the first housing 911 and the second housing 912, which means above the housing. The cover 913, the first housing 911 and the second housing 912 may form a first cavity. The first housing 911 and the second housing 912 are respectively provided with an external air inlet 914, the external air inlet 914 is arranged at a rear end of the first housing 911 and the second housing 912, and the external air inlet 914 may be oriented in different directions. Through arranging this external air inlet 914, external cooling air flow may enter the first cavity through the external air inlet 914, which means that the external cooling air flow enters an interior of the power head 900 to dissipate heat for the control assembly and the driving assembly. A motor base 915 is arranged at a bottom of the first housing 911 and the second housing 912, the air outlet 105 is arranged on the motor base 915, and the motor is arranged on the motor base 915, which means that the motor is located in the power head 900. The output shaft 51 of the motor extends to an outside of the power head 900 through a perforation hole of a center of the motor base 915. When assembly, the first housing 911 and the second housing 912 are first assembled with the motor base 915, and then the cover 913 is fixed on the top of the first housing 911 and the second housing 912.

Please refer to FIG. 57 through FIG. 58. In this embodiment, the cover 913 is further provided with a windshield plate 9131. The windshield plate 9131 is vertically arranged in the cover 913. When the cover 913 is arranged on the first housing 911 and the second housing 912, the windshield plate 9131 is located inside the power head 900, and the windshield plate 9131 contacts the top of the first housing 911 and the second housing 912. When the cooling air flow enters the power head 900 through the external air inlet 914, the windshield plate 9131 blocks a travel direction of the external air flow, so that the cooling air flow can only flow according to a preset path, the control assembly and the drive assembly in the power head 900 may be cooled, and a heat dissipation of the control assembly and the driving assembly is accelerated. In this embodiment, the external air inlet 914 may be arranged at a left rear of the first housing 911 and inclined toward a rear and downward direction, so that when the lawn mower 100 is placed on the ground and suffers from rain, the rain cannot enter the power head 900 from the external air inlet 914.

Please refer to FIG. 59. In this embodiment, a control assembly 918 is arranged on the top of the first housing 911 and the second housing 912, and the control assembly 918 is used for controlling the motor. An internal air inlet 920 is formed at two ends of the control assembly 918. Through the internal air inlet 920, the cooling air flow may flow into a below of the control assembly 918, thereby dissipating heat for the heat sink and the control unit s on the control assembly 918. The first housing 911 and the second housing 912 are further provided with a fixing buckle 919, the fixing buckle 919 is arranged on both sides of the control assembly 918, and a height of the fixing buckle 919 protrudes beyond the control assembly 918. A top of the fixing buckle 919 is provided with a bent part, and the bent part contacts a top surface of the control assembly 918, so that the control assembly 918 may be fixed. In this embodiment, the control assembly 918 is fixed through the fixing buckle 919, so that the control assembly 918 may be easily disassembled. In this embodiment, a battery pack cavity 917 is further arranged in front of the control assembly 918, and the battery pack may be arranged in the battery pack cavity 917, so that the power head 900 may be powered.

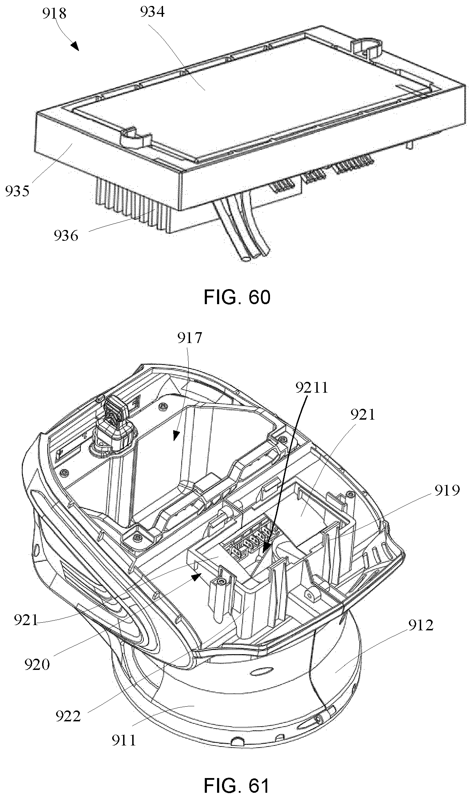

Please refer to FIG. 60. In this embodiment, the control assembly 918 may include a casing 934 and a fixing base 935. The casing 934 is arranged on the fixing base 935, and a heat sink 936 and a control unit (not shown in the figure) are arranged on the casing 934. The heat sink 936 and control unit may be oriented towards an inside of the housing. Through arranging the fixing base 935, a smaller size control board may be applied.

Please refer to FIG. 59 through FIG. 61. In this embodiment, the first housing 911 and the second housing 912 are provided with a supporting body 922. The supporting body 922 on the first housing 911 and the supporting body 922 on the second housing 912 form a supporting base, and the control assembly 918 may be fixed on the supporting base. For example, the supporting base is a hollow rectangle, which means that a center of the supporting base includes a through hole, and the control assembly 918 is fixed on a periphery of the through hole, that is, the fixing base 935 is fixed on the periphery of the through hole, the heat sink 936 and the control unit on the control assembly 918 are facing the through hole simultaneously, and the casing 934 of the control assembly 918 is facing the cover 913. The fixing buckle 919 is then arranged on both sides of the supporting base. When the control assembly 918 is arranged on the supporting base, the bent part on the fixing buckle 919 may be abutted against a top of the control assembly 918, that is, and the fixing buckle 919 is leaned against the fixing base 935, so that the control assembly 918 is fixed. In this embodiment, the internal air inlet 920 is further arranged on a side edge of the supporting base, an air guiding plate 921 is arranged inside the supporting base, which means that the air guiding plate 921 is connected with the internal air inlet 920, and the air guiding plate 921 is obliquely extended to an inside of the supporting base. The heat sink 936 and the control unit on the control assembly 918 may be located on the air guiding plate 921, which means that the heat sink 936 may be close to the internal air inlet 920, so when the cooling air flow passes through the internal air inlet 920, the air guiding plate 921 may play a guiding role to the cooling air flow, so that the cooling air flow is fully in contact with the heat sink 936 and the control unit, and a cooling of the heat sink 936 and the control unit is accelerated. The embodiment arranges the internal air inlet 920 on both sides of the control assembly 918, so that the control assembly 918 may be dissipated from two directions, and the heat dissipation of the control assembly 918 is accelerated. At the same time, since the air guiding plate 921 on the first housing 911 and the air guiding plate 921 on the second housing 912 is not connected, which means that a ventilation gap 9211 is formed between the air guiding plate 921 on the first housing 911 and the air guiding plate 921 on the second housing 912, so that the cooling air flow may flow to the bottom of the first housing 911 and the second housing 912 through the ventilation gap 9211 between the air guiding plates 921. Of course, in some embodiments, only one air guiding plate 921 may be arranged in the supporting base. For example, the air guiding plate 921 on the right side in FIG. 61 is omitted, and the air guiding plate 921 on a left side is retained, so the ventilation gap 9211 is located on a right side of the air guiding plate 921 on the left side. Since only one air guiding plate 921 is arranged, an area of the ventilation gap 9211 is increased, so that more external cooling air flows to the bottom of the first housing 911 and the second housing 912.

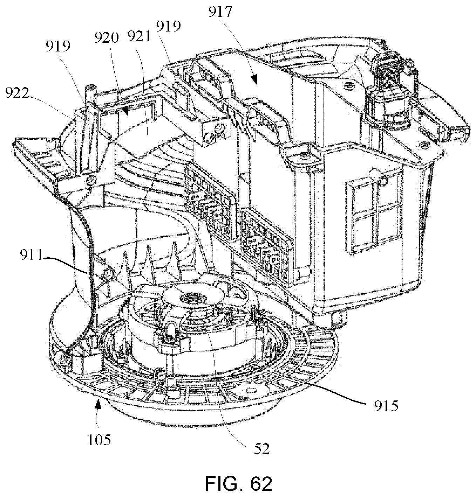

Please refer to FIG. 60 through FIG. 62. FIG. 62 is only a schematic view of an interior of the first housing 911. The supporting body 922 is arranged on the first housing 911, a fixing buckle 919 is arranged on both sides of the supporting body 922, and the fixing buckle 919 protrudes from the supporting body 922. The internal air inlet 920 is arranged at one end of the supporting body 922, the internal air inlet 920 may be close to the heat sink 936 on the control assembly 918, and the air guiding plate 921 is arranged in the supporting body 922. The air guiding plate 921 may form a second cavity with the control assembly 918. The cooling air flow enters the second cavity through the internal air inlet 920, and the control unit and the heat sink 936 may be located in the second cavity, so that the cooling air flow may be fully in contact with the heat sink 936 and the control unit, thereby speeding up the cooling of the heat sink 936 and the control unit. The motor base 915 is arranged at a bottom of the first housing 911, the motor 130 is arranged on the motor base 915, and the motor base 915 is further provided with the air outlet 105. A height between the control assembly 918 and the motor 130 may be greater than 100mm, for example, 150mm. Through increasing the height between the control assembly 918 and the motor 130, the cooling air flow may be cooled down again after contacting the control assembly 918, thereby cooling the motor 130.

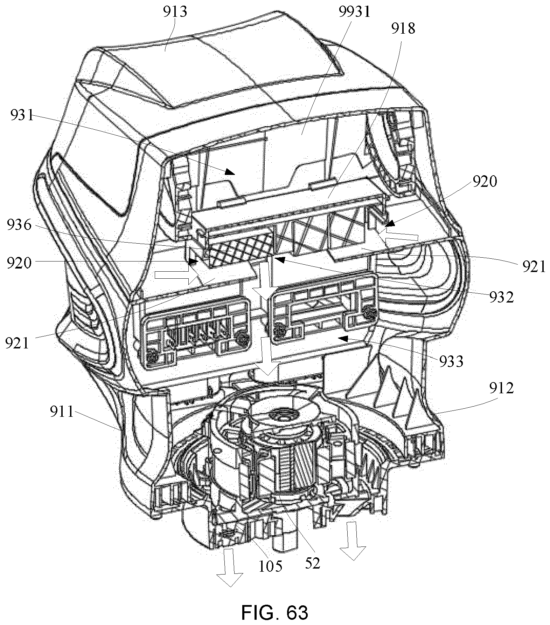

Please refer to FIG. 61 through FIG. 63. FIG. 63 is a position schematic view of a first cavity 931, a second cavity 932 and a third cavity 933. The embodiment defines an area between the top of the first housing 911 and the second housing 912, and the cover 913 as the first cavity 931, an area between the control assembly 918 and the air guiding plate 921 as the second cavity 932, and an area between the motor 130 and the underside of the air guiding plate 921 as the third cavity 933, that is to say, the first cavity 931 is located above the second cavity 932, and the second cavity 932 is located above the third cavity 933. The first cavity 931 and the second cavity 932 may be communicated through the internal air inlet 920, and the second cavity 932 and the third cavity 933 may be communicated through the ventilation gap 9211. An air speed of the cooling air flow in the second cavity 932 is greater than that in the third cavity 933. When the power head 900 is working, the cooling air flow enters the first cavity 931 through the external air inlet 914 (as shown in FIG. 57). Because of an effect of the air inlet hole 9131, and the air inlet hole 9131 is vertically arranged on the top of the first housing 911 and the second housing 912, so that the cooling air flow can only enter the second cavity 932 through the internal air inlet 920. Since the heat sink 936 and the control unit on the control assembly 918 are located in the second cavity 932, the cooling air flow may be fully in contact with the heat sink 936 and the control unit, so that the heat sink 936 and the control unit may be quickly cooled. After the external air flow cools the heat sink 936 and the control unit, the air flow enters the third cavity 933 through the ventilation gap 9211 between the air guiding plates 921, and at the same time since a height of the control assembly 918 and 52 is greater than 100mm, a temperature of the cooling air flow may be reduced, so that when the cooling air flow flows out of the outside through the air outlet 105, the cooling air flow may first pass through an inside of the 52, thereby cooling the 52, which means absorbing heat generated in a working process of the 52. Therefore, the heat dissipation of the 52 may be accelerated. It should be noted that, arrows in FIG. 63 represent a flowing path of the cooling air flow.

Please refer to FIG. 57. In some embodiments, in order to prevent other debris such as lawn clippings and dust from entering the inside of the power head 900 with the cooling air flow, which may cause a damage to the 52 and the control assembly 918, a filter component (not shown in the figure) may also be arranged in an outer side of the external air inlet 914.

Please refer to FIG. 55 through FIG. 63. The following will explain a heat dissipation process of the lawn mower 100. When the power head 100 is the working state, the 52 is started, and the impeller 502 rotates and generates suction. The cooling air flow enters the power head 900 under the suction of the impeller 502 through the external air inlet 914, which means entering an inside of the first cavity 931. Because of a blocking effect of the windshield plate 9131, the cooling air flow entering the first cavity 931 enters the second cavity 932 through the internal air inlet 920 and the air guiding plate 921. Since the heat sink 936 is located in the second cavity 932, the cooling air flow may be fully in contact with the heat sink 936, so that the heat sink 936 may be quickly cooled. Then the cooling air flow enters the third cavity 933 through the ventilation gap 9211, and when the cooling air flow enters the third cavity 933, since the height of the 52 and the control assembly 918 is greater, the cooling air flow may play a cooling effect, and then enters an inside of the 52, thereby cooling the 52. Finally, the cooling air flow flows out through the air outlet 105 at a bottom of the motor base 915. In a flow process of the cooling air flow, heat inside the control assembly 918 and the 52 may be taken away, so that the power head 900 can work at a relatively stable temperature, and working efficiency of the lawn mower 100 may be improved.

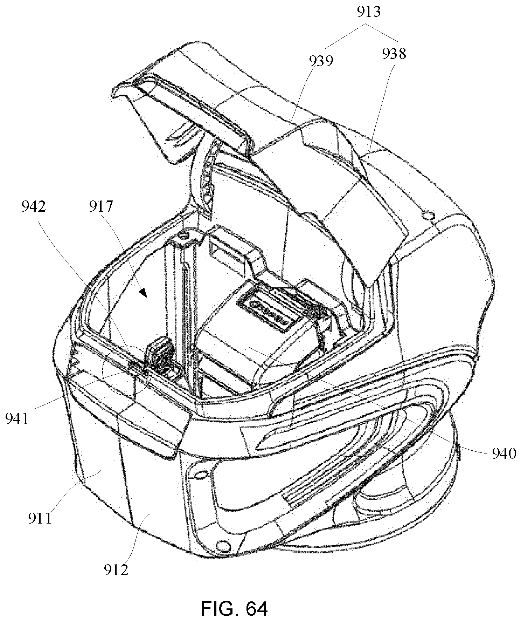

Please refer to FIG. 64. In this embodiment, the first housing 911 and the second housing 912 both includes a battery pack cavity 917, and the battery pack cavity 917 may be located at a front end of the power head 900. The battery pack 940 may be arranged in the battery pack cavity 917, and the battery pack 940 may also be defined as an energy assembly. The battery pack 940 includes multiple battery cells, and the battery cells are arranged along a longitudinal direction of the battery pack. In other embodiments, the battery pack may have different shapes, and the battery cells may also be arranged in other directions. Depending on a number of battery cells and how they are combined, the battery pack may output different voltages. In this embodiment, the battery pack 940 is an 80V battery pack, for example. Of course, the battery pack of other voltages is still within a protection range of the embodiment. In this embodiment, a number of battery pack cavities 917 is at least two, so a number of battery packs 940 is at least two, and the two battery packs 940 are arranged side by side along a transverse direction of the power head 900.

Please refer to FIG. 64 through FIG. 66. In this embodiment, the cover may further include a fixing cover 938 and a second flip cover 939. The second flip cover 939 is rotatably arranged on the fixing cover 938, and the second flip cover 939 is arranged at a front end of the fixing cover 938. The fixing cover 938 may include an opening area 9381 and a covering area 9382, and the opening area 9381 is located at a front end of the covering area 9382. The second flip cover 939 may be located above the opening area 9381. The opening area 9381 may be arranged on a periphery of the battery pack cavity 917, and when the second flip cover 939 is covered on the fixing cover 938, the second flip cover 939 may cover the battery pack 940, so that the battery pack 940 may be protected. The covering area 9382 may be located on the control assembly 918 (as shown in FIG. 63), which means that the covering area 9382 completely covers the control assembly 918. A front end of the opening area 9381 is further provided with a lower buckle 941, and an elastic component 942 is further arranged on an inner side of the lower buckle 941. The elastic component 942 is closer to the battery pack cavity 917 than the lower buckle 941, and the elastic component 942 may be protruded from the fixing cover 938. In this embodiment, a mounting hole may be arranged on the inner side of the lower buckle 941, then the elastic component 942 is arranged in the mounting hole, and the elastic component 942 protrudes from the mounting hole. In this embodiment, a central axis of the elastic component 942 and a central axis of the lower buckle 941 may coincide with each other, and the central axis of the elastic component 942 and the central axis of the lower buckle 941 are located on a central axis of the opening area 9381 for example. In this embodiment, the elastic component 942 is for example a rubber pad. Of course, in some embodiments, the cover 913 may also include only the second flip cover 939, which means that the second flip cover 939 is rotatably arranged on the top of the first housing 911 and the second housing 912. Of course, in some embodiments, when the battery pack 940 is directly arranged on the chassis 10 (as shown in FIG. 55), then the second flip cover 939 may be rotatably arranged on the chassis 10, and the second flip cover 939 may also cover the battery pack 940, so that a structure of the lawn mower 100 may be simplified.

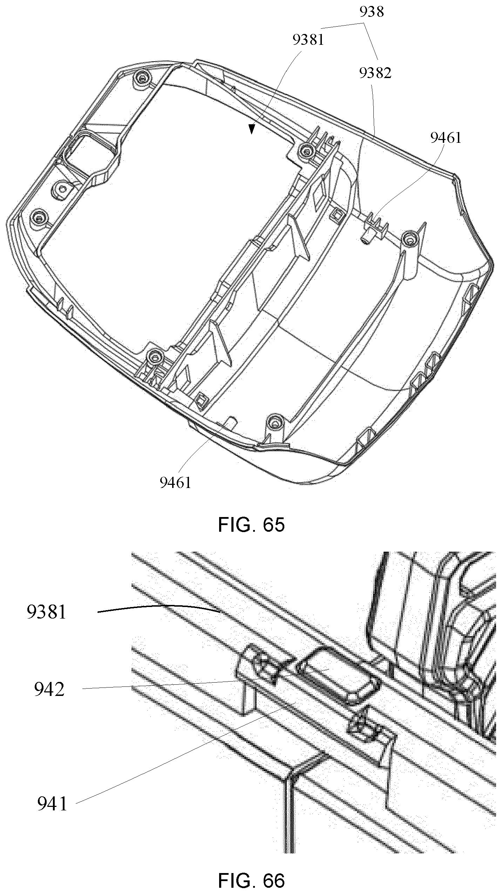

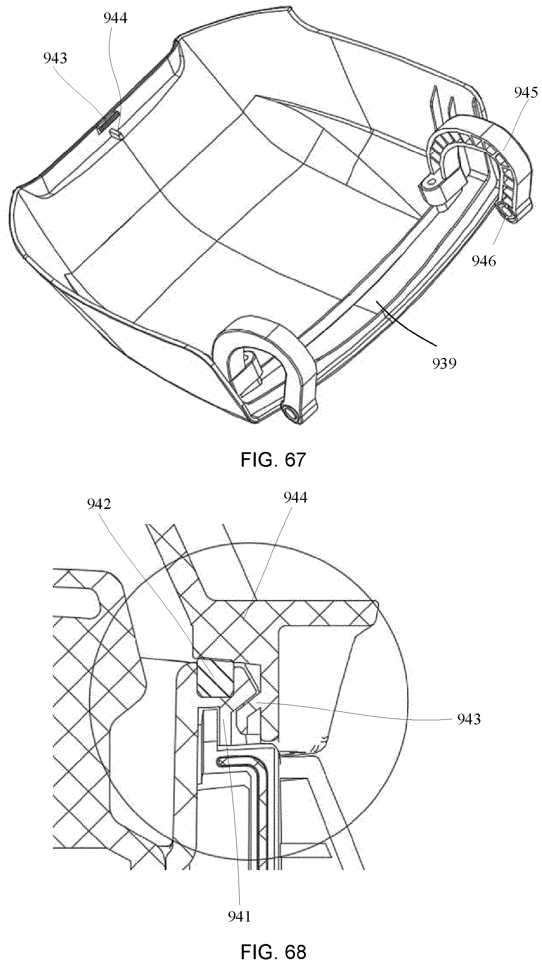

Please refer to FIG. 66 through FIG. 68. In this embodiment, an inside of the second flip cover 939 (a surface of the second flip cover 939 facing the battery pack cavity 917) is provided with an upper buckle 943 matched with the lower buckle 941, and a limiting rib 944 is further arranged on an inner side of the upper buckle 943. The limiting rib 944 corresponds to the elastic component 942. When the second flip cover 939 is covered on the fixing cover 938, and the limiting rib 944 contacts the elastic component 942 and extrudes the elastic component 942, so that the elastic component 942 is deformed, and the upper buckle 943 is buckled into the lower buckle 941 simultaneously. When the upper buckle 943 is buckled into the lower buckle 941, the elastic component 942 generates an elastic force to the limiting rib 944, so that a flexible connection between the second flip cover 939 and the fixing cover 938 is realized. In this embodiment, the elastic force of the elastic component 942 to the limiting rib 944 is less than a buckling force between the upper buckle 943 and the lower buckle 941, so as to avoid the upper buckle 943 from being separated from the lower buckle 941. A compression amount of elastic component 942 may be greater than or equal to a gap between upper buckle 943 and lower buckle 941, so as to ensure that the gap between upper buckle 943 and lower buckle 941 is small or substantially there is no gap. Therefore, in a process of transporting or using this lawn mower 100, an abnormal noise of the lawn mower 100 may be reduced. In some embodiments, the limiting rib 944 may also be arranged on the front end of the opening area 9381, and the elastic component 942 may also be correspondingly arranged on the second flip cover 939, which means that a position of the limiting rib 944 and a position of the elastic component 942 are interchanged.

Please refer to FIG. 65 through FIG. 67. In this embodiment, the upper buckle 943 and the limiting rib 944 are positioned at a front end of the second flip cover 939, and a hinge 945 is arranged at a rear end of the second flip cover 939. The front end of the second flip cover 939 may be one end close to the lower buckle 941, and a thickness of the second flip cover 939 may be one end away from the lower buckle 941. In this embodiment, a first end of the hinge 945 is fixed on the second flip cover 939, and a second end of the hinge 945 is provided with a hinge hole 946. The hinge hole 946 may be connected with a pivot 947 on the covering area 9382, which means that the second flip cover 939 is fixed on the pivot 947 through the hinge 945, so that the second flip cover 939 is rotatably arranged on the fixing cover 938. In this embodiment, for example, two hinges 945 are arranged at the rear end of the second flip cover 939, and two pivots 947 are correspondingly arranged on the fixing cover 938. The hinge 945 and the pivot 947 may be located on a surface of the second flip cover 939 facing the battery pack cavity 917 and a surface of the fixing cover 938 facing the battery pack cavity 917 respectively.

The power head of the embodiment may include the housing, the housing includes the first housing and the second housing arranged symmetrically, and the external air inlet is arranged both on the first housing and the second housing. The cover is arranged on the housing. The first housing, the second housing and the cover forms the first cavity. The cooling air flow enters the first cavity through the external air inlet. The disclosure is further provided with the supporting base on the housing, the internal air inlet is arranged at both ends of the supporting base. The housing further includes the air guiding plate simultaneously, the air guiding plate extends to the inside of the supporting base, and the air guiding plate is connected with the internal air inlet simultaneously. When a control assembly is arranged on the supporting base, the control assembly and the air guiding plate may form the second cavity. The heat sink and the control unit on the control assembly are also located in the second cavity simultaneously. The cooling air flow entering the first cavity may enter the second cavity through the internal air inlet, and simultaneously due to an effect of the air guiding plate, the cooling air flow may be fully in contact with the heat sink and the control unit, thereby being conducive to a rapid heat dissipation of the control unit and the heat sink. The driving assembly is arranged at the bottom of the housing. The air outlet is arranged on the driving assembly, the driving assembly and the air guiding plate form the third cavity, and the second cavity and the third cavity may be communicated since a ventilation gap formed between the air guiding plates, so that the cooling air flow may enter the third cavity. A height of the motor to the control assembly in the disclosure may be greater than 100mm, so the cooling air flow through the control unit and the heat sink can be fully cooled, and then the cooling airflow enters the inside of the driving assembly, thereby realizing a heat dissipation of the driving assembly. The cooling air flow finally flows out of the outside through the air outlet, so that the power head is at a more stable operating temperature, thereby improving the working efficiency of the lawn mower.

The above description is only a preferred embodiment of the disclosure and an explanation of the technical principle used. Those skilled in the art should understand that a disclosure scope involved in this disclosure is not limited to the technical solutions formed by the specific combination of the above technical features. At the same time, it should also cover other technical solutions formed by any combination of the above technical features or their equivalent features without departing from a concept of the disclosure, such as a technical solution formed by replacing the above-mentioned features with technical features with similar functions disclosed in (but not limited to) this disclosure.

## Claims

1. A blade assembly, comprising:
a blade base, a first boss and a second boss being arranged on a blade assembly surface of the blade base, a height of the first boss being a first height, and a height of the second boss being a second height;
a first blade, provided with a first mounting hole matched with the first boss; and
a second blade, provided with a second mounting hole matched with the second boss; wherein the first blade is mounted on the first boss, and the second blade is mounted on the second boss.

2. The blade assembly according to claim 1, wherein the first height is greater than the second height.

3. The lawn mower according to claim 2, wherein the first height is about 5-8mm, and the second height is about 2-4mm.

4. The blade assembly according to claim 1, wherein the first blade is located on the second blade, and the first blade and the second blade are dislocated from each other.

5. The blade assembly according to claim 1, wherein the second boss is arranged between the first boss and the blade base.

6. The blade assembly according to claim 5, wherein a projection profile of the first boss on the blade base is positioned in a projection profile of the second boss on the blade base.

7. The blade assembly according to claim 1, wherein the blade assembly surface of the blade base is further provided with at least one second positioning boss, the second positioning boss is arranged at a side edge of the second boss, and the second blade is provided with a second positioning hole matched with the second positioning boss.

8. The blade assembly according to claim 7, wherein the blade assembly surface of the blade base is further provided with at least one first positioning boss, the first positioning boss is arranged at a side edge of the first boss, the second positioning boss is arranged between the first positioning boss and the blade base, and the first blade is provided with a first positioning hole matched with the first positioning boss.

9. The blade assembly according to claim 8, wherein, the first positioning boss is foolproof.

10. The blade assembly according to claim 1, wherein, an edge of the blade assembly surface of the blade base is provided with at least one supporting boss, and the first blade is supported on a supporting surface of the supporting boss.

11. A power head, comprising:
a housing having at least one external air inlet;
a cover, arranged on the housing, and forming a first cavity with the housing;
a control assembly, arranged on the housing, and the cover covering the control assembly;
at least one internal air inlet, arranged on the housing, and arranged at a side edge of the control assembly;
at least one air guiding plate, arranged on the housing, and forming a second cavity with the control assembly; and
a driving assembly, arranged at a bottom of the housing, having an air outlet, and forming a third cavity with the air guiding plate;
wherein cooling air flow enters the first cavity through the external air inlet, and enters the second cavity and the third cavity through the internal air inlet to flow out through the air outlet.

12. The power head according to claim 11, wherein the cover comprises a windshield plate, and the windshield plate contacts a top of the housing.

13. The power head according to claim 11, wherein the control assembly comprises:
a casing, arranged on a supporting base;
a heat sink, arranged on the casing; and
a control unit, arranged on the casing, and the heat sink and the control panel being located in the second cavity.

14. The power head according to claim 11, wherein the driving assembly comprises:
a motor base, arranged at the bottom of the housing, and the air outlet being arranged on the motor base; and
a motor, arranged on the motor base.

15. The power head according to claim 11, wherein the housing further comprises a battery pack cavity, and an energy assembly is arranged in the battery pack cavity.

16. The power head according to claim 11, wherein an air speed of the cooling air flow in the second cavity is greater than an air speed of the cooling air flow in the third cavity.

17. A lawn mower, comprising:
a chassis, two ends of a bottom of the chassis being provided with front wheels and rear wheels respectively;
a driving assembly, mounted on the chassis;
a blade assembly, mounted on the bottom of the chassis and connected with the driving assembly; and
a handle folding mechanism, mounted on the chassis, and including:
a handle mounting base, fixed to the chassis,
a limiting plate, mounted on the handle mounting base and provided with a plurality of limiting structures,
a handle, an end of the handle being rotatably connected with the limiting plate, and the handle comprising a first handle and a second handle,
a cross rod, mounted between the handles, and
a limiting assembly, located in the handle, and the cross rod being capable of driving the limiting assembly to move to enable the handle to be capable of being fixed at different positions of the limiting plate.

18. The lawn mower according to claim 17, wherein the limiting assembly comprises a spring pin, the limiting structure comprises at least a first limiting structure, a second limiting structure and a third limiting structure, and the first limiting structure, the second limiting structure and the third limiting structure are arranged at intervals in a circumferential direction; the first limiting structure is provided with a first limiting hole, and the spring pin is
matched with the first limiting hole to fix the handle at a first position; the second limiting structure is a blocking plate, and the spring pin on the limiting assembly is matched with the blocking plate to fix the handle at a second position; and
the third limiting structure is provided with a second limiting hole, and the spring pin on the limiting assembly is matched with the second limiting hole to fix the handle at a third position.

19. The lawn mower according to claim 17, wherein the handle is provided with a notch, the cross rod is mounted at the notch through a cross rod mounting plate, and the cross rod mounting plate is matched with the notch.

20. The lawn mower according to claim 18, wherein the limiting assembly further comprises:
a connecting piece, fixedly connected at an end of the spring pin, and connected with the handle through a column pin;
a spring, sleeved on the spring pin and located between the connecting piece and a gasket at a front end of the spring pin; and
a steel wire rope, a first end of the steel wire rope being connected with the connecting piece, and a second end of the steel wire rope being connected with the cross rod mounting plate.
